(19) Europäisches Patentamt
European Patent Office
Office européen des brevets

(11) EP 3 438 202 B1

(12) EUROPEAN PATENT SPECIFICATION

(45) Date of publication and mention of the grant of the patent:
**14.06.2023 Bulletin 2023/24**

(21) Application number: **17774723.5**

(22) Date of filing: **24.03.2017**

(51) International Patent Classification (IPC):
***C08L 69/00*** (2006.01) ***C08G 64/42*** (2006.01)
***C08K 5/10*** (2006.01) ***C08K 5/109*** (2006.01)
***C08K 5/1575*** (2006.01) ***C08G 64/40*** (2006.01)
***C08G 64/06*** (2006.01) ***C08G 64/08*** (2006.01)

(52) Cooperative Patent Classification (CPC):
(C-Sets available)
**C08G 64/406; C08G 64/06; C08G 64/081; C08K 5/109; C08K 5/1575** (Cont.)

(86) International application number:
**PCT/JP2017/011902**

(87) International publication number:
**WO 2017/170186 (05.10.2017 Gazette 2017/40)**

# (54) MANUFACTURING METHOD OF AN AROMATIC POLYCARBONATE RESIN COMPOSITION

HERSTELLUNGSVERFAHREN FÜR AROMATISCHES POLYCARBONATHARZ

PROCÉDÉ DE FABRICATION DE RÉSINE DE POLYCARBONATE AROMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2016 JP 2016068723**

(43) Date of publication of application:
**06.02.2019 Bulletin 2019/06**

(73) Proprietor: **Mitsubishi Gas Chemical Company, Inc.**
**Tokyo 100-8324 (JP)**

(72) Inventors:
- **ISAHAYA, Yoshinori**
  **Tokyo 125-8601 (JP)**
- **HIRASHIMA, Atsushi**
  **Tokyo 125-8601 (JP)**
- **HARADA, Hidefumi**
  **Tokyo 125-8601 (JP)**
- **ITO, Maki**
  **Tokyo 125-8601 (JP)**
- **HAYAKAWA, Jun-ya**
  **Tokyo 125-8601 (JP)**
- **ISOBE, Takehiko**
  **Tokyo 125-8601 (JP)**
- **SHINKAI, Yousuke**
  **Tokyo 125-8601 (JP)**
- **SHIMOKAWA, Keisuke**
  **Tokyo 125-8601 (JP)**

(74) Representative: **Hoffmann Eitle**
**Patent- und Rechtsanwälte PartmbB**
**Arabellastraße 30**
**81925 München (DE)**

(56) References cited:
**WO-A1-03/031516** **WO-A1-2012/157766**
**WO-A1-2014/077342** **WO-A1-2014/077350**
**WO-A1-2014/077351** **WO-A1-2015/072473**
**JP-A- H0 925 258** **JP-A- 2000 159 879**
**JP-A- 2011 513 522** **JP-A- 2011 516 700**
**JP-A- 2015 189 905** **JP-A- 2016 000 772**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/109, C08L 69/00;**
**C08K 5/1575, C08L 69/00**

**Description**

TECHNICAL FIELD

The present invention relates to a process for producing an aromatic polycarbonate resin.

BACKGROUND ART

Polycarbonate resins have widely been used in many fields because of their excellent heat resistance, impact resistance and transparency. However, some aromatic polycarbonate resins have an insufficient flowability, and they could hardly be applied to injection molding of precision parts, thin materials, etc. In order to apply an aromatic polycarbonate resin to injection molding, it is necessary to increase the molding temperature and the mold temperature, which, however, would make the molding cycle longer and raise the molding cost higher. Or, during the molding, degradation of an aromatic polycarbonate resin or deterioration of its color hue sometimes occur.

The technique for improving the flowability of aromatic polycarbonate resins includes lowering of the weight average molecular weight, addition of a low molecular weight oligomer, widening of the molecular weight distribution, etc. However, such a technique tends to adversely affect the desirable physical properties such as heat resistance and impact resistance that aromatic polycarbonate resins originally possess.

In connection with the above, there is disclosed an aromatic polycarbonate resin having color hue and heat resistance improved by regulating the content of aromatic cyclic oligomer, which is considered to be by-produced from the raw material aromatic dihydroxy compound and a compound capable of introducing a carbonic acid bond, within a certain range at the time of producing the aromatic polycarbonate resin (for example, see Patent document 1). Also, there is disclosed a polycarbonate composition having good flowability, which contains a branched structure and a cyclic oligomer (for example, see Patent document 2).

On the other hand, as a process for producing a polycarbonate resin, there is disclosed a process for producing a high molecular weight polycarbonate resin which comprises the steps of reacting an aromatic polycarbonate prepolymer with an aliphatic diol compound (linking agent) having a specific structure in the presence of a transesterification catalyst to increase the molecular weight, while removing out from the reaction system at least a part of the cyclic carbonate by-produced during the molecular weight increasing reaction, and it is said that it is possible to maintain the good quality of the aromatic polycarbonate resin and achieve sufficiently high molecular weight (for example, see Patent documents 3 and 4). WO 03/031516 A1 relates to a resin composition comprising a polycarbonate having a viscosity average molecular weight of at least 10,000 obtained by filtration in a molten state and at least one selected from the group consisting of an inorganic filler and a thermoplastic resin other than polycarbonates. WO 2014/077350 A1 is related to a process for producing a highly polymerized aromatic polycarbonate resin comprising a highly polymerizing step of reacting an aromatic polycarbonate prepolymer with an aliphatic diol compound in the presence of a transesterification catalyst to obtain a highly polymerized aromatic polycarbonate resin.

CITATION LIST

Patent Literature

Patent Literature 1: JP 2000-159879 A
Patent Literature 2: JP 2011-513522 A
Patent Literature 3: WO 2011/062220 A
Patent Literature 4: WO 2012/157766 A

SUMMARY OF INVENTION

Technical Problem

However, the conventional technique is not always satisfactory in providing both the desirable physical properties that aromatic polycarbonate resins originally possess and the improved color hue and flowability, and development of an aromatic polycarbonate resin having both of these properties has been desired. The problem to be solved by the present invention is to provide an aromatic polycarbonate resin composition having high flowability, in particular, flowability at low shear of which is high and color hue is good.

Solution to Problem

Specific measures for solving the above-mentioned problems are as follows, and the present invention encompasses the following embodiments.

[1] It is a process for producing an aromatic polycarbonate resin comprising the steps of:

reacting an aromatic polycarbonate prepolymer and a dialcohol compound in the presence of a transesterification catalyst to increase a molecular weight to obtain a crude aromatic polycarbonate resin containing a cyclic carbonate; and
feeding the crude aromatic polycarbonate resin to a kneading extruder equipped with a vent port, a water injection port and a screw, and then, injecting water and carrying out devolatilization at a discharge resin temperature of not lower than 200°C and not higher than 310°C, to remove at least a part of the cyclic carbonate, wherein the water injection port is provided upstream the vent port.

[2] It is the process as described in [1], wherein the cyclic carbonate is present in the crude aromatic polycarbonate resin in an amount of 1 ppm to 10,000 ppm in mass basis.
[3] It is the process as described in [1] or [2] wherein the cyclic carbonate is present in the aromatic polycarbonate resin in an amount of less than 20 ppm in mass basis.
[4] It is the process as described in any one of [1] to [3], wherein the water is injected in an amount of at least 0.05 part by mass to 3.0 parts by mass based on 100 parts by mass of the crude aromatic polycarbonate resin.
[5] It is the process as described in any one of [1] to [4], wherein the kneading extruder is equipped with a port for adding a catalyst deactivating agent, and the port for adding a catalyst deactivating agent is upstream the water injection port.
[6] It is the process as described in [5], wherein the catalyst deactivating agent is an acidic compound.

Advantageous Effects of Invention

According to the present invention, it is possible to provide an aromatic polycarbonate resin composition having high flowability, particularly flowability at low shear and good color hue.

BRIEF DESCRIPTION OF DRAWINGS

Fig. 1 is a drawing showing the correlation between the weight average molecular weight (Mw) and the Q10 value of the aromatic polycarbonate resin compositions according to Examples and Comparative examples.
Fig. 2 is a drawing showing the correlation between the weight average molecular weight (Mw) and the Q160 value of the aromatic polycarbonate resin compositions according to Examples and Comparative examples.
Fig. 3 is a drawing showing the correlation between the content of the aliphatic cyclic carbonate and the Q10 value of the aromatic polycarbonate resin compositions according to Examples and Comparative examples.
Fig. 4 is a drawing showing the correlation between the content of the aliphatic cyclic carbonate and the Q160 value of the aromatic polycarbonate resin compositions according to Examples and Comparative examples.
Fig. 5 is a schematic drawing showing one example of a producing apparatus to be used in the production process of the present embodiment.
Fig. 6 is a schematic drawing showing one example of port arrangement of a twin-screw extruder to be used in the production process of the present embodiment.

DESCRIPTION OF EMBODIMENTS

In the present specification, the term "step" is understood not only to refer to an independent step but also to include an action by which the intended purpose of the step can be achieved even if the action cannot be clearly distinguished from other steps. Also, the numerical range indicated by using "to" refers to the range including the numerical values described before and after "to" as the minimum value and the maximum value, respectively. Further, when more than one substance is present for each of the components in the composition, the content of each of the components in the composition is understood to mean the total amount of the more than one substance present in the composition unless otherwise specifically mentioned.

<Aromatic polycarbonate resin composition>

The aromatic polycarbonate resin composition comprises an aromatic polycarbonate resin having a structural unit represented by formula (1), an aliphatic cyclic carbonate represented by formula (2) in a content of 10 ppm to 10,000 ppm, an aromatic cyclic carbonate (hereinafter also referred to as the "first compound") represented by formula (3), and at least one compound (hereinafter also referred to as the "second compound") selected from the group consisting of compounds represented by any one of formulae (4) to (6), wherein a total content of the aromatic cyclic carbonate and the at least one compound represented by any one of formulae (4) to (6) ranges 0.1% by mass to 2.0% by mass in terms of bisphenol A. The aromatic polycarbonate resin composition has high flowability, in particular, flowability at low shear and good color hue without impairing desirable physical properties such as impact resistance, etc., that the aromatic polycarbonate resin inherently possesses. Here, the expression "high flowability" means that the aromatic polycarbonate resin composition comprising the aliphatic cyclic carbonate, the first compound and the second compound in prescribed proportions shows a higher flowability than an aromatic polycarbonate resin having a similar weight average molecular weight (Mw). In addition, the flowability at low shear can be evaluated by the Q10 value explained below.

(a) Aromatic polycarbonate resin

The aromatic polycarbonate resin composition contains an aromatic polycarbonate resin having the structural unit represented by the following formula (1).

[Formula 5]

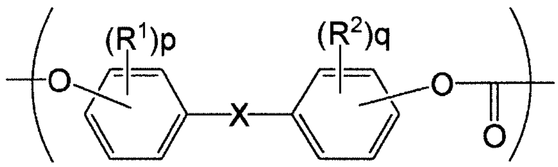

(1)

In the formula, each of $R^1$ and $R^2$ independently represents a halogen atom, an alkyl group having 1 to 20 carbon atoms, an alkoxy group having 1 to 20 carbon atoms, a cycloalkyl group having 6 to 20 carbon atoms, an aryl group having 6 to 20 carbon atoms, a cycloalkoxy group having 6 to 20 carbon atoms or an aryloxy group having 6 to 20 carbon atoms, each of p and q independently represents an integer of 0 to 4, and X represents a single bond or a group selected from the following group (L).

[Formula 6]

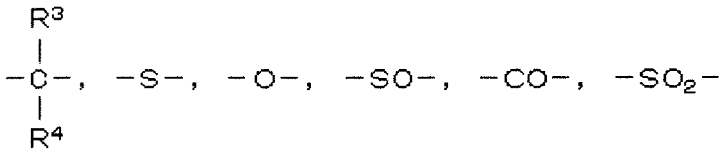

(L)

Here, each of $R^3$ and $R^4$ independently represents a hydrogen atom, an alkyl group having 1 to 10 carbon atoms or an aryl group having 6 to 10 carbon atoms, or $R^3$ and $R^4$ may be bonded to each other to form an aliphatic ring.

The weight average molecular weight (Mw) of the aromatic polycarbonate resin is, for example, 25,000 or more, preferably 25,000 to 60,000, more preferably 30,000 to 60,000, and further preferably 40,000 to 60,000. If the resin has a weight average molecular weight of 25,000 or more, it tends to have an improved heat resistance and strength, while if the resin has a weight average molecular weight of 60,000 or less, it tends to have a better flowability. The weight average molecular weight (Mw) of the aromatic polycarbonate resin and the aromatic polycarbonate resin composition is a value measured by gel permeation chromatography (GPC), and is a weight average molecular weight in terms of polystyrene calculated from a calibration curve of standard polystyrene prepared beforehand.

The aromatic polycarbonate resin can be produced by a conventionally known method using an aromatic dihydroxy compound and a compound capable of introducing a carbonic acid bond as raw materials and is preferably produced by a production process of an aromatic polycarbonate resin described later. The aromatic dihydroxy compound, from which the structural unit represented by the above-mentioned formula (1) is derived, includes a compound represented by the following formula (1').

[Formula 7]

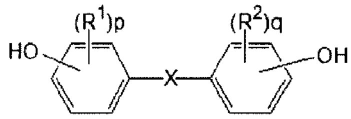

(1')

In formula (1'), $R^1$, $R^2$, p, q, and X are the same as $R^1$, $R^2$, p, q, and X in the above-mentioned formula (1), respectively.

Specifically, such an aromatic dihydroxy compound includes bis(4-hydroxyphenyl)methane, 1,1-bis(4-hydroxyphenyl)ethane, 2,2-bis(4-hydroxyphenyl)propane (hereinafter also referred to as "bisphenol A"), 2,2-bis(4-hydroxyphenyl)butane, 2,2-bis(4-hydroxyphenyl)octane, bis(4-hydroxyphenyl)phenylmethane, 1,1-bis(4-hydroxyphenyl)-1-phenylethane, bis(4-hydroxyphenyl)diphenylmethane, 2,2-bis(4-hydroxy-3-methylphenyl)propane, 1,1 -bis(4-hydroxy-3 -tert-butylphenyl)propane, 2,2-bis(3,5-dimethyl-4-hydroxyphenyl)propane, 2,2-bis(4-hydroxy-3-phenylphenyl)propane, 2,2-bis(3-cyclohexyl-4-hydroxyphenyl)propane, 2,2-bis(3,5-dichloro-4-hydroxyphenyl)propane, 2,2-bis(4-hydroxy-3-bromophenyl)propane, 2,2-bis(3,5-dibromo-4-hydroxyphenyl)propane, 1,1-bis(4-hydroxyphenyl)cyclopentane, 1,1-bis(4-hydroxyphenyl)cyclohexane, 2,2-bis(4-hydroxy-3-methoxyphenyl)propane, 4,4'-dihydroxydiphenyl, 4,4'-dihydroxydiphenyl ether, 4,4'-dihydroxy-3,3'-dimethyldiphenyl ether, 4,4'-dihydroxydiphenylsulfide, 4,4'-dihydroxy-3,3'-dimethyldiphenylsulfide, 4,4'-dihydroxydiphenylsulfoxide, 4,4' -dihydroxy-3,3' -dimethyldiphenylsulfoxide, 4,4' -dihydroxydiphenylsulfone, 4,4' -dihydroxy-3,3' -dimethyldiphenylsulfone, 4,4'-dihydroxybenzophenone, $\alpha$,$\alpha$'-bis(4-hydroxyphenyl)-1,4-diisopropylbenzene, fluorenebisphenol, hydroquinone, resorcinol, etc.

Of these, 2,2-bis(4-hydroxyphenyl)propane is more preferred, because it is stable and a product with a smaller amount of impurities contained therein is readily available, etc.

More than one different aromatic dihydroxy compounds mentioned above may be used in combination as necessary, for the purposes of controlling the glass transition temperature, improving the flowability, improving the refractive index, reducing the birefringence, etc., controlling the optical properties, etc.

Examples of the compound capable of introducing a carbonic acid bond (carbonate bond) into the aromatic polycarbonate resin include phosgene, carbonic acid diester, etc. The method for producing the aromatic polycarbonate resin includes, for example, a method in which an aromatic dihydroxy compound is directly reacted with phosgene, etc., (interfacial polymerization method), a method in which an aromatic dihydroxy compound and a carbonic acid diester such as diphenyl carbonate, etc., are subjected to a transesterification reaction in a molten state (transesterification method or melting method), etc.

When the aromatic polycarbonate resin is produced by the interfacial polymerization method, it is usually carried out by reacting the above-mentioned bisphenol and phosgene in the presence of an acid binding agent and a solvent. As the acid binding agent, for example, pyridine, an alkali metal hydroxide such as sodium hydroxide, potassium hydroxide, etc., are used, and as the solvent, for example, methylene chloride, chloroform, etc., are used.

Further, in order to promote the polycondensation reaction, a tertiary amine catalyst such as triethylamine, etc., a quaternary ammonium salt such as benzyltriethylammonium chloride, etc., may be used. Moreover, it is preferable to add a monofunctional compound such as phenol, p-t-butylphenol, p-cumylphenol, a long chain alkyl-substituted phenol, etc., as a molecular weight modifier. Also, if desired, a small amount of an antioxidant such as sodium sulfite, hydrosulfite, etc., or a branching agent such as phloroglucinin, isatin bisphenol, trisphenol ethane, etc., may be added.

It is suitable to carry out the reaction usually within the range of 0°C to 150°C, and preferably within the range of 5°C to 40°C. The reaction time varies depending on the reaction temperature, but it usually ranges 0.5 minute to 10 hours, and preferably 1 minute to 2 hours. Also, during the reaction, it is preferable to maintain the pH of the reaction system at 10 or more.

When the aromatic polycarbonate resin is produced by the transesterification method or the melting method, a carbonic acid diester is used. The carbonic acid diester is, for example, represented by the following formula (7).

[Formula 8]

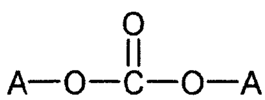

(7)

Here, each of A in formula (7) is independently a linear, branched or cyclic monovalent hydrocarbon group having 1 to 10 carbon atoms which may be substituted. Two A's may be the same or different from each other. In

particluar, A is preferably a substituted or unsubstituted aromatic hydrocarbon group.

Specific examples of the carbonic acid diester include an aromatic carbonic acid diester such as diphenyl carbonate, ditolyl carbonate, bis(2-chlorophenyl) carbonate, dinaphthyl carbonate, bis(4-phenylphenyl) carbonate, etc. In addition, an aliphatic carbonic acid diester such as dimethyl carbonate, diethyl carbonate, dibutyl carbonate, dicyclohexyl carbonate, etc., may also be used as desired. Of these, diphenyl carbonate is preferable from the viewpoint of the reactivity, the stability against coloration of the resulting resin, and further the cost. The carbonic acid diester may be used alone or in combination.

Also, together with the compound capable of introducing a carbonic acid bond as described above, a dicarboxylic acid, a dicarboxylic acid ester, etc., may be used in an amount of preferably 50 mol% or less, and more preferably 30 mol% or less. As such a dicarboxylic acid, a dicarboxylic acid ester, etc., usable are terephthalic acid, isophthalic acid, diphenyl terephthalate, diphenyl isophthalate, etc. Use of such a dicarboxylic acid, a dicarboxylic acid ester, etc., in combination with the carbonic acid diester gives a polyester carbonate.

When the aromatic polycarbonate resin is produced by the transesterification method or the melt method, the carbonic acid diester is used in a ratio of 1.01 mol to 1.30 mol, preferably 1.02 mol to 1.20 mol, and particularly preferably 1.03 mol to 1.15 mol per 1 mol of the aromatic dihydroxy compound. When the molar ratio is 1.01 or more, the terminal OH group of the produced aromatic polycarbonate resin does not increase, and the thermal stability of the polymer tends to be good. When the molar ratio is 1.30 or less, the reaction rate of the transesterification is kept high under the same conditions, the production of the aromatic polycarbonate resin having a desired molecular weight is facilitated, the amount of the remaining carbonic acid diester in the produced aromatic polycarbonate resin hardly increases, and the odor from the residual carbonic acid diester at the time of molding or in the molded product is faint, so that it is preferable.

When the aromatic polycarbonate resin composition is produced by the transesterification method or the melt method, at least one of an alkali metal compound and an alkaline earth metal compound can be used as a transesterification catalyst. Combined use of a basic compound such as a basic boron compound, a basic phosphorus compound, a basic ammonium compound, an amine compound, etc., as a co-catalyst may be possible; however, it is particularly preferable to use the alkali metal compound and/or the alkaline earth metal compound only. The transesterification catalyst may be used alone or in combination.

The alkali metal compound includes, for example, sodium hydroxide, potassium hydroxide, lithium hydroxide, cesium hydroxide, sodium hydrogen carbonate, potassium hydrogen carbonate, lithium hydrogen carbonate, cesium hydrogen carbonate, sodium carbonate, potassium carbonate, lithium carbonate, cesium carbonate, sodium acetate, potassium acetate, lithium acetate, cesium acetate, sodium stearate, potassium stearate, lithium stearate, cesium stearate, sodium borohydride, potassium borohydride, lithium borohydride, cesium borohydride, phenylated sodium borate, phenylated potassium borate, phenylated lithium borate, phenylated cesium borate, sodium benzoate, potassium benzoate, lithium benzoate, cesium benzoate, disodium hydrogen phosphate, dipotassium hydrogen phosphate, dilithium hydrogen phosphate, dicesium hydrogen phosphate, disodium phenylphosphate, dipotassium phenylphosphate, dilithium phenylphosphate, dicesium phenylphosphate; an alcoholate or a phenolate of sodium, potassium, lithium, cesium; disodium salt, dipotassium salt, dilithium salt, dicesium salt of bisphenol A, etc.

In addition, the alkaline earth metal compound includes, for example, calcium hydroxide, barium hydroxide, magnesium hydroxide, strontium hydroxide, calcium hydrogen carbonate, barium hydrogen carbonate, magnesium hydrogen carbonate, strontium hydrogen carbonate, calcium carbonate, barium carbonate, magnesium carbonate, strontium carbonate, calcium acetate, barium acetate, magnesium acetate, strontium acetate, calcium stearate, barium stearate, magnesium stearate, strontium stearate, etc.

Specific examples of the basic boron compound include a sodium salt, a potassium salt, a lithium salt, a calcium salt, a barium salt, a magnesium salt or a strontium salt of tetramethylboron, tetraethylboron, tetrapropylboron, tetrabutylboron, trimethylethylboron, trimethylbenzylboron, trimethylphenylboron, triethylmethylboron, triethylbenzylboron, triethylphenylboron, tributylbenzylboron, tributylphenylboron, tetraphenylboron, benzyltriphenylboron, methyltriphenylboron, butyltriphenylboron, etc.

The basic phosphorus compound includes, for example, triethylphosphine, tri-n-propylphosphine, triisopropylphosphine, tri-n-butylphosphine, triphenylphosphine, tributylphosphine, a quaternary phosphonium salt, etc.

The basic ammonium compound includes, for example, tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide, butyltriphenylammonium hydroxide, etc.

The amine compound includes, for example, 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylaminoimidazole, 2-methoxyimidazole, imidazole, 2-mercaptoimidazole, 2-methylimidazole, aminoquinoline, etc.

In the case of using the alkali metal compound and/or the alkaline earth metal compound, the transesterification

catalyst is used in an amount within the ratio of, for example, $1\times10^{-6}$ mol or less, preferably $1\times10^{-8}$ mol to $1\times10^{-6}$ mol, further preferably $1\times10^{-7}$ mol to $1\times10^{-6}$ mol in terms of metal content, per 1 mol of the aromatic dihydroxy compound. When it is $1 \times 10^{-8}$ mol or more in terms of metal content, sufficient polymerization activity can be obtained and an aromatic polycarbonate resin having a desired molecular weight can be easily obtained. When it is $1\times10^{-6}$ mol or less in terms of metal content, the color hue of polymer is not worsened and an amount of foreign matter due to generation of a gel hardly increases.

The aromatic polycarbonate resin can also be produced by reacting an aromatic polycarbonate prepolymer, which is an oligomer having a structural unit represented by formula (1), etc., and a dialcohol compound, which is a linking agent, represented by the following formula (8a) in the presence of a transesterification catalyst to increase the molecular weight. The aromatic polycarbonate resin produced by this method contains almost no skeleton derived from the dialcohol compound, which is a linking agent. Therefore, it is structurally almost the same as the aromatic polycarbonate resin obtained by the conventional interface method or melting method, and has physical properties equivalent to those of the aromatic polycarbonate resin obtained by the conventional interfacial method. Further, use of the dialcohol compound as the linking agent permits prompt increase of molecular weight, suppression of degree of branching despite the high molecular weight, and improvement in thermal stability (heat resistance) at elevated temperatures.

[Formula 9]

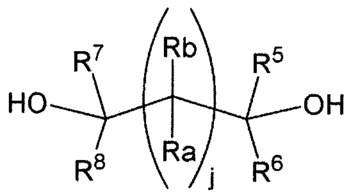

(8a)

In formula (8a), each of Ra and Rb independently represents a hydrogen atom, a halogen atom, a linear or branched alkyl group having 1 to 30 carbon atoms which may contain an oxygen atom or a halogen atom, a cycloalkyl group having 3 to 30 carbon atoms which may contain an oxygen atom or a halogen atom, an aryl group having 6 to 30 carbon atoms which may contain an oxygen atom or a halogen atom, or an alkoxy group having 1 to 15 carbon atoms which may contain an oxygen atom or a halogen atom, or Ra and Rb may be bonded to each other to form a ring. Each of $R^5$ to $R^8$ independently represents a hydrogen atom, a halogen atom or a linear or branched alkyl group having 1 to 5 carbon atoms. And j represents an integer of 1 to 30.

More preferable dialcohol compound represented by formula (8a) is a compound represented by the following formula (8b). In formula (8b), Ra and Rb are the same as those in formula (8a).

[Formula 10]

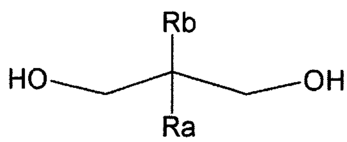

(8b)

The dialcohol compound represented by formula (8b) includes 2-butyl-2-ethylpropane-1,3-diol, 2,2-diisobutylpropane-1,3-diol, 2-ethyl-2-methylpropane-1,3-diol, 2,2-diethylpropane-1,3-diol, 2-methyl-2-propylpropane-1,3-diol, propane-1,3-diol, 2,2-diisoamylpropane-1,3-diol and 2-methylpropane-1,3-diol. Preferably, it is at least one member selected from the group consisting of the above diols.

The dialcohol compound may be used alone or in combination. Suitable dialcohol compound actually used may sometimes vary depending on the reaction conditions, etc. It can be appropriately selected in view of the reaction conditions to be employed, etc.

The amount of the dialcohol compound used ranges preferably 0.01 mol to 1.0 mol, more preferably 0.1 mol to 1.0 mol, further preferably 0.1 mol to 0.5 mol, and particularly preferably 0.2 mol to 0.4 mol, per 1 mol of the total amount of the terminal group. Use of the dialcohol compound in an amount of the above-mentioned upper limit value or less tends to suppress the occurrence of insertion reaction, in which the dialcohol compound is inserted as a copolymerization component into the main chain of the aromatic polycarbonate resin, as well as suppress the adverse effect on the physical properties due to the rise of copolymerization ratio. Also, use of the dialcohol compound in an amount of the above-mentioned lower limit value or more enhances the effect of increasing the molecular weight, which is

preferable.

(b) Aliphatic cyclic carbonate

The aromatic polycarbonate resin composition contains at least one aliphatic cyclic carbonate represented by the following formula (2) in a content of 10 ppm to 10,000 ppm. The aromatic polycarbonate resin composition may contain only one aliphatic cyclic carbonate or may contain more than one aliphatic cyclic carbonate. The content refers to the total content of the aliphatic cyclic carbonate represented by formula (2). The aliphatic cyclic carbonate represented by formula (2) has an effect of improving flowability, in particular, flowability at the time of low shear (relating to the Q10 value explained later) of the aromatic polycarbonate resin composition. The content of the aliphatic cyclic carbonate within the above-mentioned range provides good balance between the appearance and the flowability, in particular, flowability at the time of low shear (the Q10 value). It ranges preferably 10 ppm to 1,000 ppm, and more preferably 10 ppm to 500 ppm. The content of the aliphatic cyclic carbonate is measured by GC-MS.

[Formula 11]

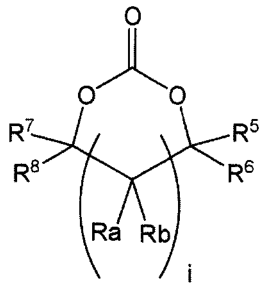

(2)

In formula (2), each of Ra and Rb independently represents a hydrogen atom, a halogen atom, a linear or branched alkyl group having 1 to 30 carbon atoms which may contain an oxygen atom or a halogen atom, a cycloalkyl group having 3 to 30 carbon atoms which may contain an oxygen atom or a halogen atom, an aryl group having 6 to 30 carbon atoms which may contain an oxygen atom or a halogen atom, or an alkoxy group having 1 to 15 carbon atoms which may contain an oxygen atom or a halogen atom, or Ra and Rb may be bonded to each other to form a ring.

In formula (2), preferably, each of Ra and Rb independently represents a hydrogen atom, a halogen atom, a linear or branched alkyl group having 1 to 8 carbon atoms, a cycloalkyl group having 3 to 8 carbon atoms, an aryl group having 6 to 10 carbon atoms or an alkoxy group having 1 to 8 carbon atoms, or Ra and Rb are bonded to each other to form an alicyclic ring having 3 to 8 carbon atoms. As the halogen atom, a fluorine atom is preferable.

In formula (2), more preferably, each of Ra and Rb is independently a hydrogen atom or a linear or branched alkyl group having 1 to 5 carbon atoms, further preferably a linear or branched alkyl group having 1 to 4 carbon atoms. Preferable specific examples include a methyl group, an ethyl group, a propyl group, an n-butyl group, an isobutyl group, an isopentyl group, etc., and more preferable specific examples include a methyl group, an ethyl group, a propyl group, an n-butyl group and an isobutyl group.

In formula (2), each of $R^5$ to $R^8$ independently represents a hydrogen atom, a halogen atom or a linear or branched alkyl group having 1 to 5 carbon atoms. Preferably, each of them independently represents a hydrogen atom, a fluorine atom or a methyl group, more preferably a hydrogen atom.

In formula (2), i represents an integer of 0 to 30. It is preferably an integer of 1 to 6, more preferably 1 to 3, and particularly preferably 1.

More preferable aliphatic cyclic carbonate represented by formula (2) is a compound represented by the following formula (2b). In formula (2b), Ra and Rb have the same meanings as in formula (2).

[Formula 12]

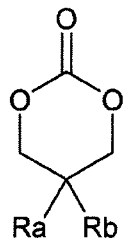

(2 b)

Specific examples of the above-mentioned aliphatic cyclic carbonate include the compounds having the structures shown below.

[Formula 13]

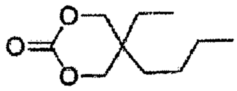
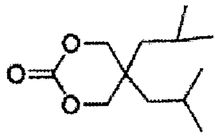
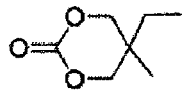
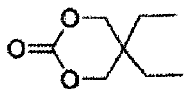
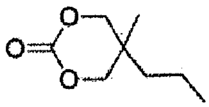
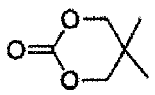
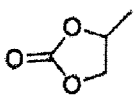
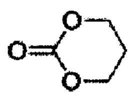
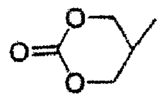

The aliphatic cyclic carbonate represented by formula (2) may be contained in the aromatic polycarbonate resin composition as a side reaction product during the production of the aromatic polycarbonate resin, or may be added to the aromatic polycarbonate resin before or after the production thereof. In the former case, the content of by-produced aliphatic cyclic carbonate can be allowed to fall within the above range by distilling at least a part of the aliphatic cyclic carbonate out of the reaction system together with aromatic cyclic carbonate, aromatic compounds, etc., derived from the raw materials explained later, during or after the synthesis of aromatic polycarbonate resin. Also, after the aliphatic cyclic carbonate is distilled off, an aliphatic cyclic carbonate can be further added to adjust the above-mentioned content.

(c) First compound

The aromatic polycarbonate resin composition contains at least one aromatic cyclic carbonate (the first compound) represented by the following formula (3). The first compound may be, for example, a component as a by-product during production of the aromatic polycarbonate resin, or may be a component separately added. When the first compound is a by-product, the specific structure of the repeating unit in the parentheses is derived from the aromatic dihydroxy compound used in the production of the aromatic polycarbonate resin. The first compound may be a single species or a combination of more than one species.

[Formula 14]

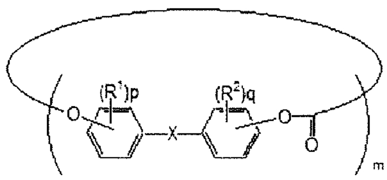

(3)

Here, X, $R^1$, $R^2$, p and q have the same meanings as X, $R^1$, $R^2$, p and q in formula (1), respectively, and m represents an integer of 2 to 6.

The first compound is preferably a compound represented by the following formula (3a).

[Formula 15]

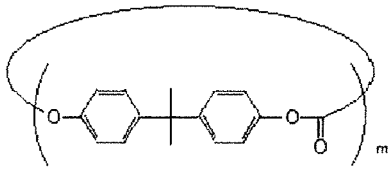

(3 a)

Details of the formation mechanism of the aromatic cyclic carbonate are unknown, but in the case of using the transesterification method or the melt method, the amount produced and proportion of the aromatic cyclic carbonate are considered to be changed by the influence of the thermal history, the type and amount of the catalyst at the time of producing the aromatic polycarbonate resin, and the influence of the concentrations of the monomer and the by-producing aromatic hydroxy compound, etc. For the cyclization of a linear molecular chain of a certain compound, a new carbonate bond needs to be formed by an intramolecular reaction. However, since this is usually unlikely to occur, the terminal groups between the molecules generally react with each other at the beginning of the polymerization reaction. And as the polymerization reaction proceeds, it is considered that the reaction between the molecules decreases, and the reaction within the molecule becomes likely to occur. In particular, it is considered that aromatic cyclic carbonates can easily be formed by maintaining molecules having a smaller number of terminal hydroxyl groups at elevated temperatures. Accordingly, in order to control the proportion of the aromatic cyclic carbonate within a desired range, it is preferable to avoid extreme lowering of the proportion of the terminal hydroxyl group during the polymerization reaction. Also, with regard to the catalyst, as the amount thereof is increased, it is considered that the carbonate bond is likely to be activated, and the reaction of the carbonate terminals within the molecule, which is unlikely to occur normally, occurs to facilitate the formation of aromatic cyclic carbonate. Moreover, since it is believed that the activation energy for the formation of aromatic cyclic carbonate is high, the higher the temperature of the reaction, the rapider the formation of aromatic cyclic carbonate. Therefore, it is advised that the polymerization be carried out at 320°C or lower, preferably 310°C or lower.

(d) Second compound

The aromatic polycarbonate resin composition contains at least one compound (second compound) selected from the group consisting of the compounds represented by any one of the following formulae (4) to (6). The aromatic polycarbonate resin composition may contain a single species of the second compound or more than one species thereof in combination.

The second compound may be a component by-produced during the production of the aromatic polycarbonate resin or may be a separately added component. When the second compound is a by-produced component, the specific structure of the repeating unit in the parentheses is derived from the aromatic dihydroxy compound used in the production of the aromatic polycarbonate resin. In the case of the interfacial polymerization method, the group having an aromatic ring at the terminal in formulae (4) and (5) is derived from the molecular weight modifier used. In the case of the transesterification method or the melting method, the group is, for example, derived from the terminal group A of the carbonic acid diester represented by formula (7).

[Formula 16]

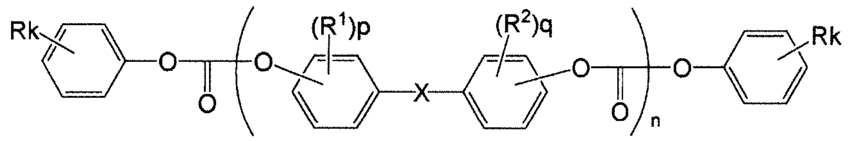

(4)

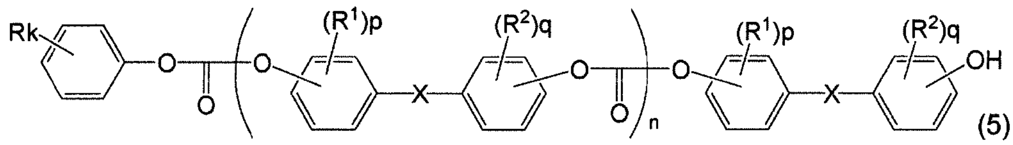

(5)

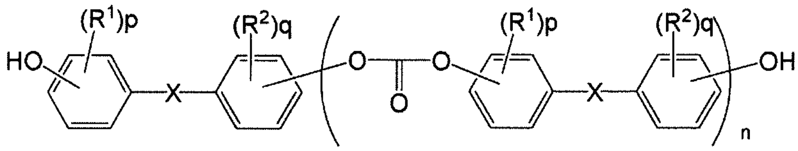

(6)

Here, X, $R^1$, $R^2$, p and q have the same meanings as X, $R^1$, $R^2$, p and q in formula (1), respectively. Each of Rk independently represents a hydrogen atom, an alkyl group having 1 to 10 carbon atoms or an aryl group having 6 to 10 carbon atoms. Each of n independently represents an integer of 1 to 6.

The second compound is preferably a compound represented by any of the following formulae (4a) to (6a).

[Formula 17]

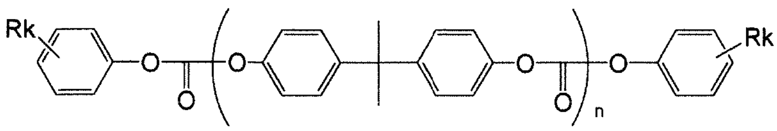

(4a)

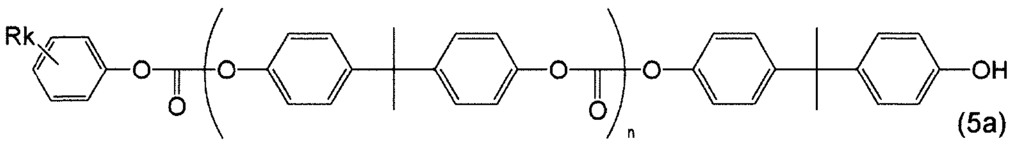

(5a)

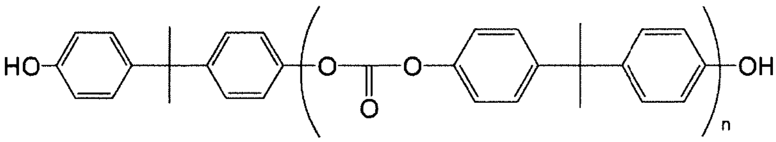

(6a)

The total content of the first compound and the second compound in the aromatic polycarbonate resin composition ranges 0.1% by mass to 2.0% by mass, preferably 0.2% by mass to 1.2% by mass, more preferably 0.3% by mass to 1.1% by mass, and further preferably 0.4% by mass to 0.9% by mass in terms of bisphenol A. The total content of the first and second compounds within the above range provides a good balance between the physical properties such as color hue, flowability, hydrolysis resistance, etc., of the aromatic polycarbonate resin composition. Although the reason for this is not always clear, it is presumed that, for example, the high reactivity of the first compound (aromatic cyclic carbonate) promotes the generation of coloring component at elevated temperatures or encourages hydrolysis.

In the case where the first compound and the second compound are components by-produced during the production of the aromatic polycarbonate resin, the final content thereof can be adjusted to the desired range, for example, by distilling these by-produced compounds off from the reaction system.

Removal of these by-products may be carried out during or after the production of the aromatic polycarbonate resin. The distillation conditions are not particularly limited. They are, for example, at a temperature of 100°C to 320°C under normal pressure or reduced pressure. The temperature preferably ranges 180°C to 320°C, more preferably 240°C to 310°C, and particularly preferably 280°C to 310°C. When the distillation is carried out under reduced pressure, it is preferably carried out under a pressure of 150 torr or less, more preferably 100 torr or less, further preferably 10 torr or less, and particularly preferably 5 torr to 0.1 torr.

The contents of the first compound and the second compound can be measured using, for example, gel permeation chromatography (GPC), high performance liquid chromatography (HPLC), mass spectrum (MS), NMR, etc. In the present specification, the contents of the first compound and the second compound are values in terms of bisphenol A, which are obtained from the calibration curve of bisphenol A prepared in advance based on measurement data by LC-MS.

The content of the first compound relative to the total content of the first and second compounds in the aromatic polycarbonate resin composition ranges preferably 20% by mass to 55% by mass, and more preferably 25% by mass to 50% by mass from the viewpoint of achieving a high impact resistance, color hue, etc., and a high flowability.

The content of the aliphatic cyclic carbonate represented by formula (2) relative to the total content of the first and second compounds in the aromatic polycarbonate resin composition ranges preferably 0.1% by mass to 10% by mass, and more preferably 0.1 % by mass to 5% by mass from the viewpoint of achieving a high impact resistance, color hue, etc., and a high flowability.

(e) Relationship between weight average molecular weight (Mw) and Q value

For the aromatic polycarbonate resin composition, the weight average molecular weight (Mw) and the Q10 value (unit: ml/s), which is a Q value measured at 280°C under a load of 10 kg, preferably satisfy the following inequality (A), and more preferably satisfy the following inequality (B). Here, the Q value is a flow value of the resin composition measured by the method described in Annex C of JIS K7210, and is used as an index of flowability. In general, the higher the Q value, the better the flowability.

$$27.79\times EXP(-1.0\times 10^{-4}\times Mw)<Q10\ value \cdots (A)$$

$$27.79\times EXP(-1.0\times 10^{-4}\times Mw)<Q10\ value<31.56\times EXP(-8.4\times 10^{-5}\times Mw) \cdots (B)$$

When the weight average molecular weight and the Q10 value satisfy the above-mentioned inequalities, the transferability of the molded article tends to be further improved. Specifically, when inequality (A) is satisfied, the flowability at the time of low shear is further improved, and the mold transferability and shapability tend to be further improved. In addition, when inequality (B) is satisfied, there is a tendency to further effectively suppress the occurrence of mold contamination and appearance failure.

For the aromatic polycarbonate resin composition, the weight average molecular weight (Mw) and the Q160 value (unit: ml/s), which is a Q value measured at 280°C under a load of 160 kg, preferably satisfy the following inequality (C), and more preferably satisfy the following inequality (D).

$$771.77\times EXP(-1.0\times 10^{-4}\times Mw)<Q160\ value \cdots (C)$$

$$771.77\times EXP(-1.0\times 10^{-4}\times Mw)<Q160\ value<744.94\times EXP(-6.5\times 10^{-5}\times Mw) \cdots (D)$$

When the weight average molecular weight and the Q160 value satisfy the above-mentioned inequalities, the flowability tends to be further improved.

In inequalities (A) and (B), the Q10 value is a melt flow volume (ml/s) per unit time determined at 280°C under a load of 10 kg. In inequalities (C) and (D), the Q160 value is a melt flow volume (ml/s) per unit time measured at 280°C under a load of 160 kg. The melt flow volume is measured using Type CFT-500D manufactured by Shimadzu Corporation, and calculated from stroke=7.0 mm to 10.0 mm. In both of the measurements, the nozzle diameter is 1 mm and the nozzle length is 10 mm.

The weight average molecular weight (Mw) of the aromatic polycarbonate resin composition ranges, for example, 25,000 to 60,000, preferably 30,000 to 60,000, and more preferably 40,000 to 60,000. When the weight average molecular weight is 25,000 or more, the heat resistance and strength tend to be further improved, and when it is 60,000 or less, the flowability tends to be better.

The higher the Q value, which is an index of flowability, the higher the flowability, which is preferable. However, as the weight average molecular weight (Mw) of the aromatic polycarbonate resin composition becomes high, the Q value tends to be lowered. For the practical use, if the Q10 value is 0.067 ml/s or more and the Q160 value is 0.02 ml/s

or more, it is possible to carry out injection molding of precision parts, thin articles, etc., without raising so high the molding temperature, and the gelling of the resin, etc., are unlikely to occur.

(f) Color hue

The aromatic polycarbonate resin composition has a good color hue. Evaluation of the color hue of an aromatic polycarbonate resin composition is generally expressed by YI value. If the YI value is 1.5 or less, the color hue is good, and the YI value is preferably 1.4 or less. The lower limit is not particularly limited and is, for example, 0.5 or more. The YI value is measured according to the criteria of JIS K7105.

(g) Other additives

The aromatic polycarbonate resin composition may contain other additives such as a heat resistant stabilizer, a hydrolysis stabilizer, an antioxidant, a pigment, a dye, a reinforcing agent, a filler, an ultraviolet absorber, a lubricant, a mold releasing agent, a nucleating agent, a plasticizer, a flowability improving agent, an antistatic agent, etc., if necessary, to the extent that the object of the present invention is not impaired.

The aromatic polycarbonate resin composition can be produced, for example, by mixing an aromatic polycarbonate resin having a desired weight average molecular weight and an aliphatic cyclic carbonate represented by formula (2), and optionally, an aromatic cyclic carbonate (first compound) represented by formula (3) and a compound (second compound) represented by any one of formulae (4) to (6), by a conventionally known method. Further, if necessary, other additives may be added thereto and mixed.

As the mixing method, for example, a method comprising conducting dispersing and mixing using a high-speed mixer represented by a turnbull mixer, a Henschel mixer, a ribbon blender, a super mixer, etc., followed by conducting melt-kneading using an extruder, a Banbury mixer, a roll, etc., is appropriately selected. Each component contained in the aromatic polycarbonate resin composition may be added sequentially or simultaneously.

The aromatic polycarbonate resin composition can be preferably applied for such uses as various molded articles, sheets, films, etc., obtained by injection molding, blow molding (hollow molding), extrusion molding, injection blow molding, rotational molding, compression molding, etc. For these uses, the resin composition alone and a blend of the resin composition with another polymer may be applied. Processing such as hard coat, laminate, etc., can also be preferably used depending on the application.

The aromatic polycarbonate resin composition is preferably used for extrusion molding, blow molding, injection molding, etc. Obtainable molded product includes an injection molded product such as an extrusion molded product, a hollow molded product, a precision part, a thin product, etc. Injection molded products such as a precision part and a thin product preferably have a thickness of 1 $\mu$m to 3 mm.

Specific examples of the molded products include substrates for optical disc such as compact discs (CD), DVDs, mini discs and magneto-optical discs; optical communication media such as optical fibers; various films for liquid crystal displays; display members such as light guide plates; automotive members such as head lamp lenses, meter boards, sunroofs and outer panel parts, etc.; optical parts such as lens bodies of cameras, etc.; optical equipment parts such as siren light covers, illumination lamp covers, etc.; window glass substitutes for vehicles such as railway trains, automobiles, etc.; window glass substitutes for domestic; lighting components such as sunroofs, roofs of greenhouses, etc.; lenses for goggles, sunglasses, eyeglasses; housings; housings of OA equipments such as copiers, facsimiles, personal computers, printers, etc.; housings of home electric appliances such as liquid crystal display televisions, microwave ovens, etc.; electronic part applications such as connectors, IC trays, etc.; building materials such as transparent sheets, etc.; protective equipments such as helmets, protectors, protective face masks, etc.; household goods such as baby bottles, dishes, trays, etc.; medical supplies such as dialysis cases, dentures, etc.; miscellaneous goods such as wrapping materials, writing utensils, stationery, etc.; but the present invention is not limited thereto.

Preferable uses of the aromatic polycarbonate resin composition include the following molded products that require a high strength and precision moldability:

- ·Automobile parts including headlamp lens, meter board, sunroof, window glass substitute, outer panel parts;
- ·Various films, light guiding plate for liquid crystal display, etc.;
- ·Optical disc substrate;
- ·Construction materials such as transparent sheets, etc.;
- ·A housing of a personal computer, a printer, a liquid crystal display television, etc., as a structural member.

<Process for preparing aromatic polycarbonate resin>

The process for producing an aromatic polycarbonate resin of the present embodiment comprises the steps of

(1) reacting an aromatic polycarbonate prepolymer (hereinafter also simply referred to as "prepolymer" or "PP") and a dialcohol compound in the presence of a transesterification catalyst to increase the molecular weight, to obtain a crude aromatic polycarbonate resin containing an aliphatic cyclic carbonate (hereinafter also referred to as the "first step"); and (2) feeding the crude aromatic polycarbonate resin to a kneading extruder equipped with a vent port, a water injection port and a screw, then, injecting water and carrying out devolatilization at a discharge resin temperature of not lower than 200°C and not higher than 310°C, to remove at least a part of the aliphatic cyclic carbonate, wherein the water injection port is provided upstream the vent port (hereinafter also referred to as the "second step").

In the process for producing the aromatic polycarbonate resin, an aromatic polycarbonate resin composition containing an aliphatic cyclic carbonate is obtained. Also, the obtained aromatic polycarbonate resin composition may contain the aromatic cyclic carbonate represented by the above-mentioned formula (3), and the compound represented by any one of the above-mentioned (4) to (6). That is, the process for producing the aromatic polycarbonate resin of the present embodiment is suitable as a process for producing the above-mentioned polycarbonate resin composition.

[First step]

In the first step, the prepolymer and the dialcohol compound are allowed to react in the presence of a transesterification catalyst to increase the molecular weight, to obtain a crude aromatic polycarbonate resin containing an aliphatic cyclic carbonate.

(Aromatic polycarbonate prepolymer)

The prepolymer used in the first step may be one obtained in the step of preparing the aromatic polycarbonate prepolymer or may be a commercially available product, etc. The process for producing the aromatic polycarbonate resin preferably further comprises a step of preparing an aromatic polycarbonate prepolymer (hereinafter also referred to as the "third step") in addition to the first step and the second step.

The third step preferably further includes the step of subjecting the aromatic dihydroxy compound and the carbonic acid diester to polycondensation reaction in the presence of a catalyst, to obtain a prepolymer. In the third step, the process for producing the aromatic polycarbonate resin described above can be applied, and it is preferred to apply a production process by a transesterification method or a melting method.

The weight average molecular weight of the prepolymer obtained in the third step is not particularly limited, and ranges preferably 10,000 to 40,000, more preferably 15,000 to 35,000 (calculated in terms of polystyrene by GPC).

It is preferable that at least a part of the terminal groups of the prepolymer is capped with a terminal capping group. The compound constituting the terminal capping group is not particularly limited and, for example, an aromatic monohydroxy compound can be preferably used. The ratio of the amount of the terminal capping constituted by the aromatic monohydroxy compound in the total terminal amount of the aromatic polycarbonate prepolymer is not particularly limited. It is, for example, 60 mol% or more, and preferably 80 mol% or more.

The concentration of the terminal hydroxyl group of the prepolymer is preferably 1,500 ppm or less, more preferably 1,000 ppm or less, further preferably 750 ppm or less, and particularly preferably 500 ppm or less. The concentration of the terminal hydroxyl group within this range or the amount of the capped terminal within this range tend to provide an aromatic polycarbonate resin having a sufficiently high molecular weight with good productivity.

In the present specification, the ratio of the amount of the capped terminal to the total terminal amount of the polymer (including the aromatic polycarbonate prepolymer and the aromatic polycarbonate resin) and the concentration of the hydroxyl group can be analyzed by $^1$H-NMR analysis of the polymer. A specific method of $^1$H-NMR analysis is described in Examples below. Also, the concentration of the terminal hydroxyl group in the polymer can also be measured by spectroscopic measurement with Ti complex. Specifically, it is a method of measuring the concentration of the terminal hydroxyl group (OH concentration) in the polymer according to the method described in Makromolekulare Chemie 88 (1965) 215-231, ultraviolet-visible spectroscopic analysis (wavelength: 546 nm) of a complex formed from a polymer and titanium tetrachloride in a methylene chloride solution. As the apparatus, for example, a Hitachi U-3500 ultraviolet-visible spectrophotometer may be used. The concentration of the terminal hydroxyl group (OH concentration) in the polymer can be determined with reference to ultraviolet-visible spectroscopic analysis (wavelength: 546 nm) of a complex formed from known concentrations of BPA and titanium tetrachloride.

The "amount of the total terminal group of the aromatic polycarbonate prepolymer" referred to herein is calculated assuming that, for example, 0.5 mol of a polycarbonate having no branch (or linear polycarbonate) has an amount of the total terminal group of 1 mol.

Specific examples of the terminal capping group include a terminal group derived from aromatic monohydroxy compounds such as a phenyl group, a cresyl group, an o-tollyl group, a p-tollyl group, a p-tert-butylphenyl group, a biphenyl group, an o-methoxycarbonylphenyl group, a p-cumylphenyl group, etc. Of these, a terminal group is preferably derived from an aromatic monohydroxy compound having a low boiling point, which is likely to be removed from the

reaction system by a molecular weight increasing linking reaction with a dialcohol compound; and a phenyl group, a p-tert-butylphenyl group, etc., are particularly preferable.

In the melting method (transesterification method), the terminal capping group can be introduced by using carbonic acid diester in excess relative to the aromatic dihydroxy compound at the time of producing the prepolymer. Specifically, the carbonic acid diester is used in an amount of 1.01 mol to 1.3 mol, more preferably 1.02 mol to 1.2 mol, and particularly preferably 1.03 mol to 1.15 mol per 1 mol of the aromatic dihydroxy compound, although the amount may vary depending on the apparatus used for the reaction and the reaction conditions. According to this procedure, a prepolymer satisfying the above-mentioned amount of the terminal capping group can be obtained.

The prepolymer used in the production process of the present embodiment is preferably a polycondensation polymer having the structure represented by the above-mentioned formula (1) as a main repeating unit. Here, "main" means that the content of the structural unit represented by formula (1) in all the structural units in the aromatic polycarbonate prepolymer is 60 mol% or more, preferably 80 mol% or more, and more preferably 90 mol% or more.

(Dialcohol compound)

The dialcohol compound used in the production process of the present embodiment means a compound having two alcoholic hydroxyl groups each bonded to nonaromatic carbon atoms. It may have a partial structure containing an aromatic ring in its molecular structure, but it does not embrace a phenol compound having a hydroxyl group bonded to an aromatic ring.

The dialcohol compound used in the production process of the present embodiment may be one synthesized by a known preparation step, or a commercial product, etc. Preferably, it is the compound represented by the above-mentioned formula (8a), and more preferably the compound represented by the above-mentioned formula (8b).

The dialcohol compounds may be used alone or in combination of two or more. Suitable species of dialcohol compound actually used may vary depending on the reaction conditions, etc., and can be appropriately selected depending on the reaction conditions employed, etc.

The upper limit of the boiling point of the dialcohol compound is not particularly limited. For example, the upper limit of the boiling point is 500°C or lower. According to the process of the present embodiment, even with a dialkyl alcohol compound having a relatively low boiling point, it is possible to have it efficiently contribute to the molecular weight increasing reaction. Accordingly, the dialcohol compound is further preferably one having a relatively low boiling point of 350°C or lower.

The lower limit of the boiling point of the dialcohol compound is not particularly limited. In considering that the aromatic monohydroxy compound by-produced along with the reaction between the aromatic polycarbonate prepolymer and the dialcohol compound is to be distilled off, the dialcohol compound is preferably one having a higher boiling point than that of the aromatic monohydroxy compound. In addition, the lower limit of the boiling point of the dialcohol compound is preferably selected in considering that the reaction is required to reliably proceed without volatilization under a constant temperature and pressure.

The dialcohol compound preferably has high purity, and preferably has a purity of 99% by mass or more. The impurities contained in the dialcohol compound include, for example, 2-ethyl-1-hexanol, etc., when the dialcohol compound is 2-butyl-2-ethylpropane-1,3-diol.

In addition, the content of metals in the dialcohol compound as impurities is preferably as little as possible. The metals contained as impurities include iron, and the like. The content of metals in the dialcohol compound is, for example, 5 ppm or less, and preferably 1 ppm or less.

The amount of the dialcohol compound used ranges preferably 0.01 mol to 1.0 mol, more preferably 0.1 mol to 1.0 mol, further preferably 0.1 mol to 0.5 mol, and particularly preferably 0.2 mol to 0.4 mol per 1 mol of the amount of the total terminal group of the aromatic polycarbonate prepolymer.

Use of the dialcohol compound in an amount not higher than the above-mentioned upper limit value can suppress an insertion reaction, in which the dialcohol compound is inserted as a copolymerization component into the main chain of the aromatic polycarbonate resin, and it tends to diminish its influence on the physical properties due to rise of the ratio of copolymerization. To the contrary, the ratio of copolymerization raised exceeding the upper limit value, although it makes easy to improve the physical properties by the use of the dialcohol compound, it is not preferable for increasing the molecular weight of the aromatic polycarbonate resin. On the other hand, use of the dialcohol compound in an amount not lower than the above-mentioned lower limit value is preferable, because it increases the molecular weight more remarkably.

(Transesterification catalyst)

The transesterification catalyst used in the production process of the present embodiment is not particularly limited as long as it can promote the molecular weight increasing linking reaction between the aromatic polycarbonate

prepolymer and the dialcohol compound. For example, as the transesterification catalyst, any transesterification catalyst such as a basic compound catalyst usually used as a catalyst for producing polycarbonate can be used. Specific examples of the transesterification catalyst are as described above.

In the production process of the present embodiment, as the alkali metal compound and/or the alkaline earth metal compound, it is preferable to use at least one member selected from the group consisting of cesium carbonate ($Cs_2CO_3$), sodium hydrogen carbonate ($NaHCO_3$), sodium tetraphenylborate, disodium phenylphosphate and potassium carbonate. Of these, at least one of cesium carbonate and potassium carbonate is more preferable. These catalysts may be used alone or in combination.

These catalysts are used in a ratio of, for example, $1\times10^{-6}$ mol or less, preferably $1\times10^{-8}$ mol to $1\times10^{-6}$ mol, further preferably $1\times10^{-7}$ mol to $1\times10^{-6}$ mol per 1 mol of the total of the aromatic dihydroxy compound that would constitute the aromatic polycarbonate prepolymer.

As the nitrogen-containing compound catalyst, tetramethylammonium hydroxide is preferably used. The nitrogen-containing compound catalyst can be used alone or in combination with the above-mentioned alkali metal and/or alkaline earth metal, etc. These nitrogen-containing compound catalysts are used in a ratio of $1\times10^{-3}$ mol or less, preferably $1\times10^{-7}$ mol to $1\times10^{-3}$ mol, further preferably $1\times10^{-6}$ mol to $1\times10^{-4}$ mol per 1 mol of the total of the aromatic dihydroxy compound that would constitute the aromatic polycarbonate prepolymer.

The molecular weight increasing reaction of the first step is carried out by subjecting a mixture containing a prepolymer, a dialcohol compound and a transesterification catalyst (hereinafter also referred to as "prepolymer mixture") to heat treatment under reduced pressure conditions. The order of mixing the prepolymer, the dialcohol compound and the transesterification catalyst is not particularly limited, and preferably, the dialcohol compound and the transesterification catalyst are mixed to prepare a catalyst composition, then, the catalyst composition and the prepolymer are mixed, and the resulting prepolymer mixture is subjected to heat treatment under reduced pressure conditions.

The molecular weight increasing reaction of the first step is preferably carried out in a reactor (hereinafter referred to as "molecular weight increasing linking reactor") which is provided in series with a mixing tank of a prepolymer, a dialcohol compound and a transesterification catalyst. As the molecular weight increasing linking reactor, one reactor or two or more reactors can be used, but preferably one reactor (single reactor) is used.

The prepolymer mixture may be transferred through a transfer pipe to a molecular weight increasing linking reactor. The transfer pipe for transferring the prepolymer mixture may be provided with heating means. The transfer pipe for transferring the prepolymer mixture may be similar to the transfer pipe of the catalyst composition.

Also, a pressure regulating valve may be disposed between the mixing tank and the molecular weight increasing linking reactor, and the prepolymer mixture may be transferred from the mixing tank to the molecular weight increasing linking reactor by a back pressure applied by the pressure regulating valve.

The reduced pressure condition in the molecular weight increasing step of the first step is, for example, 10 torr (1.33 kPa) or less, preferably 2.0 torr or less (267 Pa or less), more preferably 0.01 torr to 1.5 torr (1.3 Pa to 200 Pa), and further preferably 0.01 torr to 1.0 torr (1.3 Pa to 133 Pa). The pressure in the molecular weight increasing step of step (1) may be monitored by a pressure detecting means disposed in a branch pipe disposed in a reducing pressure line provided in the molecular weight increasing linking reactor.

The temperature condition of the heat treatment in the molecular weight increasing step of the first step ranges, for example, 240°C to 320°C, preferably 260°C to 310°C, and more preferably 280°C to 310°C.

Also, the temperature condition of the heat treatment in the molecular weight increasing step of the first step is preferably not higher than a temperature 80°C above the temperature Tc of the prepolymer mixing tank or of the transfer pipe of the prepolymer mixture, more preferably not higher than a temperature 50°C above the temperature Tc.

In the molecular weight increasing step of the first step, the oxygen concentration in the molecular weight increasing linking reactor is preferably set to be 0.0001% by volume to 10% by volume, and more preferably 0.0001% by volume to 5% by volume. Thereby, it is possible to effectively suppress oxidative deterioration of the dialcohol compound. In order to attain the oxygen concentration conditions, it is preferable to replace the gas in the reactor with a gas having an oxygen concentration of 10% by volume or less (preferably an inert gas such as nitrogen, argon, etc.) and to further devolatilize the oxygen-lean gas.

As a molecular weight increasing linking reactor used in the molecular weight increasing step of the first step, a horizontal stirring reactor is used. Preferably used is a horizontal stirring reactor, which is a mono-axial reactor having one stirring shaft or a multi-axial reactor having a plurality of stirring shafts, wherein at least one of the above-mentioned stirring shafts has a horizontal rotating shaft and stirring blades attached to the horizontal rotating shaft at substantially right angle and discontinuous with each other, the reactor having a LID of 1 to 15, preferably 2 to 10, in which L is a length of the horizontal rotating shaft and D is a rotation diameter of the stirring blade. Of these, more preferably, the reactor is a multi-axial horizontal stirring reactor having more than one stirring shafts.

Also, there may be used a horizontal stirring reactor represented by an extruder, which is a mono-axial reactor having one continuous screw type stirring shaft or a multi-axial reactor having a plurality of such shafts, the reactor having a LID of 20 to 100, more preferably 40 to 80, in which L is a length of the stirring shaft and D is a diameter of the

screw. Of these, more preferably, the reactor is a multi-axial horizontal stirring reactor having a plurality of stirring shafts.

Each of these horizontal stirring reactors preferably has a supply port for the prepolymer mixture at one end and a draw-out port for the produced crude aromatic polycarbonate resin at the opposite end.

In the molecular weight increasing linking reactor, a conventionally known stirring device such as a stirring blade may be provided. Specific examples of the stirring blade include a biaxial stirring blade, paddle blade, lattice blade, spectacle blade, extruder screw type blades, etc.

Also, in the above-mentioned molecular weight increasing linking reactor, a draw-out device can be provided. The crude aromatic polycarbonate resin obtained by the above-mentioned molecular weight increasing linking reactor is a highly viscous resin having a flowability at 280°C of about 2,500 Pa s (or a melt mass flow rate based on ISO 1133 of about 5.3 g/10 minutes), and it is sometimes difficult to be withdrawn from the molecular weight increasing linking reactor. It is therefore preferable to use a draw-out device. Specific examples of the draw-out device include a gear pump, a screw draw-out device, etc., A screw drawing machine is preferably used.

When the molecular weight increasing linking reactor is provided with a draw-out device, the outlet pressure variation of the draw-out device is preferably 20% or less, and more preferably 0.1% or more and 20% or less.

In each of the reactors, a distillation pipe for discharging by-products, etc., produced by the reaction, a condenser such as a condenser, dry ice trap, etc., a receiver of a recovery tank, etc., and a decompression device for maintaining the predetermined depressurized state, etc., may be provided.

In the above-mentioned horizontal stirring reactor, it is preferable to have a draw-out device of the resulting crude aromatic polycarbonate resin on the end opposite to the supply port of the prepolymer mixture. As a draw-out device, a gear pump or a screw draw-out device is preferable, and particularly preferably a screw draw-out device is used.

Further, as a shaft seal of the above-mentioned rotating shaft, it is preferable to adopt a sealing mechanism including a mechanical seal.

In order to efficiently remove by-produced aromatic monohydroxy compounds, the surface renewal property of the molecular weight increasing linking reactor used in the first step is not particularly limited, but it is desirable that the surface renewal effect represented by the following equation (II) is preferably within the range of 0.01 to 500, further preferably 0.01 to 100, and particularly preferably 0.01 to 50.

$$\text{Surface renewal effect} = A \times Re^{0.5} \times n \div V \qquad \cdots \text{(II)}$$

A: Surface area ($m^2$)
n: Rotation number/s
V: Liquid volume ($m^3$)
Re (Reynolds number):

$$Re = \rho \times n \times r^2 \div \mu$$

$\rho$: Liquid density ($kg/m^3$)
r: Diameter of stirrer (m)
$\mu$: Liquid viscosity ($kg/m \cdot s$)

The material of the reactor used in the process for producing the aromatic polycarbonate resin is preferably such that the material in the region occupying at least 90% of the total surface area of the portion in contact with the raw material monomer or the reaction mixture (hereinafter referred to as "liquid-contact portion") is at least one member selected from the group consisting of (a) a metal material having an iron content of 80% by mass or less and a Cr content of 18% by mass or more; stainless steel such as SUS304, SUS316, SUS316L, SUS310S, etc., and a metal material that is a clad material, and (b) a glass material. When the above-mentioned material is a glass material, it is further preferably a glass material having an elution amount of alkali metal of 15 ppb/$cm^2$ or less when immersed in pure water at 50°C for 120 hours.

It is most preferable that the liquid-contact portion of all reactors used in the process for producing the aromatic polycarbonate resin comprises the above-mentioned materials, but it is not always necessary that the liquid-contact portion of all the reactors comprises the above-mentioned materials, and it is preferable that at least the molecular weight increasing linking reactor used in step (1) comprises the above-mentioned materials.

In addition, the reactor used in the process for producing the aromatic polycarbonate resin is preferably electropolished in a region occupying at least 90% of the total surface area of the liquid-contact portion.

It is most preferable that the liquid-contact portions of all of the reactors used in the process for producing the

aromatic polycarbonate resin are electropolished, but it is not always necessary that the liquid-contact portions of all of the reactors are electropolished, and it is preferable that at least the liquid-contact portion of the molecular weight increasing linking reactor used in step (1) is electropolished.

Specific examples of the preferred reactors mentioned above are listed below, but the present invention is not limited thereto.

1) Specific examples of an apparatus in which a multi-axial horizontal stirring reactor having a plurality of stirring shafts, wherein at least one of the above-mentioned stirring shafts has stirring blades, which are discontinuous with each other, attached to the horizontal rotating shaft at a substantially right angle to the horizontal rotating shaft, and wherein the L/D ratio ranges from 1 to 15, wherein L is a length of the horizontal rotating shaft and D is a rotation diameter of the stirring blade, include a spectacle blade polymerization apparatus (manufactured by Hitachi, Ltd.), Continuous LIST Kneader Reactor (manufactured by LIST), AP-Reactor (manufactured by LIST), SCR (manufactured by Mitsubishi Heavy Industries, Ltd.) and KRC reactor (manufactured by KURIMOTO LTD.).
2) Specific examples of an apparatus in which a mono-axial horizontal stirring reactor having one stirring shaft, wherein the above-mentioned stirring shaft has stirring blades which are discontinuous with each other, attached to the horizontal rotating shaft at a substantially right angle to the horizontal rotating shaft, and wherein the LID ratio ranges from 1 to 15, wherein L is a length of the horizontal rotating shaft and D is a rotation diameter of the stirring blade, include Continuous LIST Kneader Reactor (manufactured by LIST).
3) Specific examples of an apparatus in which a multi-axial horizontal stirring reactor having a plurality of continuous screw type stirring shafts, and wherein the LID ratio ranges from 20 to 100, wherein L is a length of the stirring shaft and D is a diameter of the screw, include a twin-screw extruder TEX series (manufactured by THE JAPAN STEEL WORKS, LTD.), a twin-screw extruder TEM series (manufactured by TOSHIBA MACHINE CO., LTD.) and Type ZSK twin-screw extruder (manufactured by Warner & Pfleiderer Lebensmitteltechnik GmbH).
4) Specific examples of an apparatus in which a mono-axial horizontal stirring reactor having one continuous screw type stirring shaft, wherein the LID ratio range from 20 to 100, wherein L is a length of the stirring shaft and D is a diameter of the screw, include Busscokneader (manufactured by Buss).

In the first step, an aliphatic cyclic carbonate having a specific structure is by-produced as the molecular weight increasing reaction progresses. Accordingly, the crude aromatic polycarbonate resin obtained in the first step contains an aliphatic cyclic carbonate.

It is more preferable to remove at least a part of the by-produced aliphatic cyclic carbonate to the outside of the reaction system before carrying out the second step of this embodiment. That is, the aromatic polycarbonate prepolymer reacts with the dialcohol compound as a linking agent to increase the molecular weight, and the molecular weight increasing reaction of the aromatic polycarbonate prepolymer proceeds more efficiently by removing at least a part of the cyclic carbonate by-produced in the reaction to the outside of the reaction system.

The molecular weight increasing reaction and removal of the aliphatic cyclic carbonate may be carried out separately physically and temporally, but they can be carried out simultaneously, and preferably carried out simultaneously.

Specific examples of the by-produced aliphatic cyclic carbonate is the compound represented by the above-mentioned formula (2), and the details of which are as described above. The by-produced aliphatic cyclic carbonate has a structure corresponding to the dialcohol compound used in the first step, and is thought to be a cyclic form derived from the dialcohol compound, but the reaction mechanism by which the aliphatic cyclic carbonate is by-produced accompanied by such a molecular weight increasing reaction is not necessarily clear.

The aromatic polycarbonate resin with increased molecular weight obtained by the production process using the dialcohol compound having the structure represented by formula (8a) contains almost no structural unit derived from the dialcohol compound, and has almost the same skeleton as the prepolymer.

That is, it has an extremely high thermal stability and excellent heat resistance, because the structural unit derived from the dialcohol compound, which is a linking agent, is not introduced in the skeleton or is introduced in an extremely small amount even if introduced. Although it has the same skeleton as the prepolymer, on the other hand, it has excellent qualities such as low N value (structural viscosity index), excellent flowability, low proportion of unit having heterogeneous structure, excellent color hue, etc.

In the case a structural unit derived from the dialcohol compound is introduced in the skeleton of the aromatic polycarbonate resin with an increased molecular weight obtained by the process for producing an aromatic polycarbonate resin, the ratio of the amount of the structural unit derived from the dialcohol compound based on the amount of the total structural unit of the aromatic polycarbonate resin with an increased molecular weight is 1 mol% or less, more preferably 0.1 mol% or less.

Specific method for removing the by-produced aliphatic cyclic carbonate from the reaction system includes a method in which a distillate formed in the above-mentioned molecular weight increasing reaction is distilled off from the

reaction system. That is, the by-produced cyclic carbonate is distilled off from the reaction system as a distillate containing unreacted raw material compounds (the dialcohol compound, the carbonic acid diester, etc.) and an aromatic monohydroxy compound such as phenol, etc., which has also been by-produced in the same reaction. The distillation conditions are not particularly limited, and the temperature in the reactor when distilling off the distillate from the reaction system ranges preferably 240°C to 320°C, more preferably 260°C to 310°C, and further preferably 280°C to 310°C.

Removal is carried out on at least a part of the by-produced aliphatic cyclic carbonate. It is generally difficult to remove the by-produced cyclic carbonate completely. The preferable upper limit of the residual amount of the aliphatic cyclic carbonate in the crude aromatic polycarbonate resin is 10,000 ppm, more preferable upper limit is 5,000 ppm, further preferable upper limit is 500 ppm, and particularly preferable upper limit is 300 ppm.

[Second step]

In the second step, the crude aromatic polycarbonate resin obtained in the first step is fed to a kneading extruder equipped with a vent port, a water injection port and a screw, and then, pouring water and devolatilization are carried out at a discharge resin temperature not lower than 200°C and not higher than 310°C, to remove at least a part of the aliphatic cyclic carbonate. The crude aromatic polycarbonate resin obtained in the first step in a molten state is fed to the kneading extruder equipped with a vent port, a water injection port and a screw.

The kneading extruder is equipped with a vent port, a water injection port and a screw. Examples of the kneading extruder include a twin-screw extruder, a single-screw extruder, etc. A twin-screw extruder is preferable, because the kneadability is better.

The kneading extruder is provided with a water injection port and water is fed therethrough. For example, in Fig. 6, four water injection ports (water injection ports (3), (5), (7) and (9)) are provided, but the invention is not limited thereto. That is, the number of the water injection ports may be one, two or three or more.

However, the water injection port is provided upstream the vent port, and preferably the vent port is provided downstream the water injection port. In Fig. 6, water injection port (3), which is a water injection port, is provided upstream devolatilization port (4), which is a vent port. Further, a water injection port (5) is provided upstream devolatilization port (6), water injection port (7) is provided upstream devolatilization port (8), and water injection port (9) is provided upstream devolatilization port (10), respectively. By employing this arrangement, the aliphatic cyclic carbonate can be effectively removed so that it is preferred. To the contraty, if this arrangement is not adopted, efficient removal of the cyclic carbonate would become difficult; and, by foaming caused by due to volatile components such as steam, etc., cutting or pellet shape would not be stable in some cases at the time of pelletization of the obtained aromatic polycarbonate resin.

The site where the water injection port is provided is not particularly limited as long as it is upstream at least one vent port. From the viewpoint of efficient removal of the cyclic carbonate, it is preferable to provide the water injection port upstream at least the first vent port (for example, devolatilization port (4) in Fig. 6). Further, in the case the second and subsequent vent ports (for example, devolatilization ports (6), (8) and (10) in Fig. 6) are provided, it is preferable to provide each of the water injection ports (for example, water injection ports (5), (7) and (9) in Fig. 6) upstream each of these vent ports. It is not absolutely necessary to provide a water injection port upstream all of the vent ports.

The amount of water injected from the water injection port is preferably 0.05 part by mass or more, and more preferably 0.1 part by mass or more per 100 parts by mass of the crude aromatic polycarbonate resin fed. An amount of water injection of 0.05 part by mass or more tends to permit sufficient removal of the aliphatic cyclic carbonate. On the other hand, the upper limit of the amount of water injection is preferably 3.0 parts by mass, and more preferably 2.0 parts by mass. An amount of water injection of 3.0 parts by mass or less permits suppression of rise of the crude aromatic polycarbonate resin together with foaming through the vent port, which would clog the vent pipe. In addition, it would suppress lowering of the resin temperature in the apparatus, increase of the viscosity of the aromatic polycarbonate resin, and the shutdown of the apparatus due to over torque, effectively.

In the kneading extruder, a vent port is provided and the aliphatic cyclic carbonate is discharged therethrough.

This vent port has a vent port for discharging the aliphatic cyclic carbonate. The area ratio (A) of the opening portion of the vent port is $1.5\times10^{-4}$ $m^2$/(kg/h) or more, and preferably $2.0 \times 10^{-4}$ $m^2$/(kg/h) or more. An area ratio of $1.5\times10^{-4}$ $m^2$/(kg/h) or more tends to permit sufficient removal of the aliphatic cyclic carbonate. On the other hand, the upper limit of the area ratio (A) is preferably $5.0\times10^{-4}$ $m^2$/(kg/h), and more preferably $4.0\times10^{-4}$ $m^2$/(kg/h). An area ratio of $5.0\times10^{-4}$ $m^2$/(kg/h) or less would avoid use of a long extruder, suppress rising of the resin temperature due to heat generation by shearing, and refrain the discharge resin temperature from exceeding 350°C. In addition, it tends to suppress rising of the resin temperature due to heat generation by shearing, make possible easy satisfaction of $n^3\times d^2>25,000$, and permit sufficient devolatilization.

The pressure at the vent port is preferably 5 kPa or less, and more preferably 4 kPa or less. A pressure of 5 kPa or less tends to permit sufficient devolatilization of the cyclic carbonate. On the other hand, the lower limit of the pressure is preferably 0.01 kPa, and more preferably 0.02 kPa. A pressure of 0.01 kPa or more permit suppression of rise of the molten aromatic polycarbonate resin together with foaming through the vent port, which would clog the vent pipe.

Since the interior of the kneading extruder has the temperature and pressure ranges as described above, the aliphatic cyclic carbonate, which gasifies under these conditions, is removed out of the system through the above-mentioned vent port.

The kneading extruder has a screw. The relationship between the rotational speed n (rpm) of the screw and the screw diameter d (m) is such that $n^3 \times d^2$ is larger than 25,000, and preferably larger than 29,000. A value larger than 25,000 tends to achieve sufficient surface renewal property of the molten aromatic polycarbonate resin at the vent port and permit sufficient devolatilization of the cyclic carbonate. On the other hand, the upper limit of $n^3 \times d^2$ is preferably 100,000, and more preferably 80,000. A value of 100,000 or less would suppress rising of the aromatic polycarbonate resin temperature and worsening of color hue. Moreover, it would suppress decomposition of the aromatic polycarbonate resin and formation of phenol, etc.

As the screw used for the kneading extruder, a full flight disc is basically used, and it is preferable to use a kneading disc for the part constituting the mixing and kneading portion in order to better mixing and kneading. Examples of the kneading disc include an orthogonal kneading disc, a forward feeding kneading disc, a reverse feeding kneading disc, etc., or a kneading disc combining these, etc. Further, as a screw other than these, there is a reverse feed disc, etc. Configuration of the screw is selected those having necessary shape in view of the purpose and operating conditions.

The temperature of the aromatic polycarbonate resin, which is mixed, kneaded, and subjected to water injection and devolatilization in the interior of the kneading extruder, is controlled so that the discharge resin temperature is not lower than 200°C and not higher than 310°C. A discharge resin temperature higher than 310°C would deteriorate color hue, and in addition, cause decomposition of the aromatic polycarbonate resin, and formation of phenol, etc., in some cases. To the contrary, a discharge resin temperature lower than 200°C would increase the viscosity of the aromatic polycarbonate resin and have a risk of shutdown of the apparatus due to over torque. Note that the discharge resin temperature means a temperature of the resin at the time of discharge from the discharge port of the kneading extruder.

The kneading extruder may have a catalyst deactivating port. The catalyst deactivating port is preferably located upstream the water injection port, and in the case the apparatus has a plurality of water injection ports, the ports are preferably located at the most upstream side.

Also, the kneading extruder may be provided with an additive feeding port. The additive feeding port is preferably located downstream the water injection port, and in the case the apparatus has a plurality of water injection ports, the ports are preferably located at the most downstream side.

For example, a port arrangement diagram of a twin-screw extruder that can be used in the production process of the present embodiment is shown in Fig. 6. In the extruder shown in Fig. 6, addition port (1) for feeding a catalyst deactivating agent is provided at the most upstream side, a pair of a water injection port and a vent port for carrying out water injection and devolatilization operation is provided at the downstream side thereof at four portions, and addition port (11) for feeding additives is provided at the most downstream side.

In the second step, a catalyst deactivating agent may be added to the crude aromatic polycarbonate resin. Addition of the catalyst deactivating agent is carried out from the above-mentioned catalyst deactivating port. The catalyst deactivating agent is not particularly limited as long as it is a compound capable of lowering catalytic action of the transesterification catalyst, and a conventionally known acidic substance is generally used. These substances (catalyst deactivating agent) specifically include an aromatic sulfonic acid such as paratoluenesulfonic acid, etc.; an aromatic sulfonic acid ester such as butyl paratoluenesulfonate, etc.; an aromatic sulfonic acid salt such as tetrabutylphosphonium dodecylbenzenesulfonate, tetrabutylammonium paratoluenesulfonate, etc.; an organic halide such as stearic acid chloride, butyric acid chloride, benzoyl chloride, toluenesulfonic acid chloride, benzyl chloride, etc.; an alkylsulfate such as dimethylsulfate; phosphoric acids; phosphorous acids; etc.

Of these, a catalyst deactivating agent selected from the group consisting of paratoluenesulfonic acid, butyl paratoluenesulfonate, tetrabutylphosphonium dodecylbenzenesulfonate, and tetrabutylammonium paratoluenesulfonate is suitably used.

The amount added of the catalyst deactivating agent ranges 0.0001 part by mass to 1 part by mass, preferably 0.0005 part by mass to 0.1 part by mass per 100 parts by mass of the crude aromatic polycarbonate resin fed.

The catalyst deactivating agent is preferably added as a solution, in which the agent is dissolved in a solvent with a concentration of $7 \times 10^{-5}$ mol/g or less. In addition, a concentration of the catalyst deactivating agent is preferably not more than $7 \times 10^{-5}$ mol/g and not less than $7 \times 10^{-8}$ mol/g, in view of lowering of the temperature in the apparatus by the introduction of the solution and restriction on the design of apparatus. Further, practically preferable is a concentration not more than $7 \times 10^{-5}$ mol/g and not less than $3 \times 10^{-6}$ mol/g.

An amount used of the solvent ranges 0.05 part by mass to 4 parts by mass, preferably 0.1 part by mass to 2 parts by mass per 100 parts by mass of the crude aromatic polycarbonate resin fed.

Further, in the process for producing the aromatic polycarbonate resin, a heat resistant stabilizer, a hydrolysis stabilizer, an antioxidant, a pigment, a dye, a reinforcing agent, a filler, an ultraviolet absorber, a lubricant, a mold releasing agent, a nucleating agent, a plasticizer, a flowability improving agent, an antistatic agent, etc., may be added. Addition of the additives is carried out from the above-mentioned additive feeding port.

As the heat resistant stabilizer, a conventionally known material such as triphenylphosphine (P-$Ph_3$), etc., can be used.

As the antioxidant, tris(2,4-di-tert-butylphenyl)phosphite, n-octadecyl-β-(4'-hydroxy-3',5'-di-tert-butylphenyl)propionate, pentaerythrithyl-tetrakis[3-(3,5-di-tert-butyl-4-hydroxyphenyl)propionate], 1,6-hexanediolbis[3-(3,5-di-tert-butyl-4-hydroxyphenyl)propionate, triethylene glycol-bis-3-(3-tert-butyl-4-hydroxy-5-methylphenyl)propionate, 3,9-bis[2-{3-(3-tert-butyl-4-hydroxy-5-methylphenyl)propionyloxy}-1,1-dimethylethyl]-2,4,8,10-tetraoxaspiro[5.5]undecane, triphenylphosphite, trisnonylphenylphosphite, tris-(2,4-di-tert-butylphenyl)phosphite, tetrakis(2,4-di-tert-butylphenyl)-4,4'-biphenylenediphosphonite, tricresylphosphite, 2,2-methylenebis(4,6-di-tert-butylphenyl)octylphosphite, etc., may be used. Of these, preferred are tris-(2,4-di-tert-butylphenyl)phosphite and n-octadecyl-β-(4'-hydroxy-3',5'-di-tert-butylphenyl)propionate.

The aromatic polycarbonate resin, which has undergone mixing and kneading, and water injection and devolatilization in the kneading extruder, is preferably discharged from the discharge port of the kneading extruder, sent to the pelletizing step, and pelletized (to make product).

The resulting aromatic polycarbonate resin has substantially the same skeleton as the prepolymer. Accordingly, the aromatic polycarbonate resin is preferably a polycondensation polymer having the structure represented by the above formula (1) as a main repeating unit. Here, "main" means that that the content of the structural unit represented by formula (1) in all the structural units in the aromatic polycarbonate resin is 60 mol% or more, preferably 80 mol% or more, and more preferably 90 mol% or more.

One of the advantages of the production process of the present embodiment is that it can achieve high molecular weight in a short time from the start of the molecular weight increasing step. More specifically, according to the production process of the present embodiment, the relationship between the weight average molecular weight ($Mw_{PP}$) of aromatic polycarbonate prepolymer and the weight average molecular weight (Mw) of aromatic polycarbonate resin obtained in step (1) can be represented by the following equation (IV). Here, in the following equation (IV), k' (unit; Mw increased amount/minute)) is a number of 400 or more.

$$(Mw-Mw_{PP})/\text{Heating time (min)}=k' \cdots \text{(IV)}$$

According to the production process of the present embodiment, the number k' in the above equation (IV) can be made 400 or more, preferably 500 or more. That is, it is possible to efficiently achieve a predetermined high molecular weight by increasing the molecular weight in a short period of time from the start of the reaction in the first step.

The weight average molecular weight (Mw) of the aromatic polycarbonate resin obtained by the production process of the present embodiment is, for example, 25,000 or more, preferably 35,000 to 100,000, more preferably 35,000 to 80,000, further preferably 40,000 to 75,000, and particularly preferably 40,000 to 60,000.

Aromatic polycarbonate resins having a high molecular weight are suitable for applications such as blow molding and extrusion molding, etc., since they have a high melt tension and hardly cause drawdown. Even when they are used for injection molding, there is no string drawing, etc., and moldability is good. Further, the resulting molded products are excellent in physical properties such as mechanical properties, heat resistance, organic solvent resistance, etc.

In the aromatic polycarbonate resin obtained by the production process of the present embodiment, the N value (structural viscosity index) represented by the following equation (I) is preferably 1.30 or less, more preferably 1.28 or less, further preferably 1.25 or less, and particularly preferably 1.22 or less.

$$\text{N value}=(\log(\text{Q160 value})-\log(\text{Q10 value}))/(\log 160-\log 10) \cdots \text{(I)}$$

In the above equation (I), the Q160 value represents a melt flow volume per unit time (ml/sec) (measured using Type CFT-500D manufactured by Shimadzu Corporation (hereinafter the same), calculated from stroke=7.0 mm to 10.0 mm) measured at 280°C under a load of 160 kg, and the Q10 value represents a melt flow volume per unit time (ml/sec) (calculated from stroke=7.0 mm to 10.0 mm) measured at 280°C under a load of 10 kg. Note that the nozzle diameter is 1 mm and the nozzle length is 10 mm.

The structural viscosity index "N value" is an index of the degree of branching of aromatic polycarbonate resins. The high molecular weight aromatic polycarbonate resin obtained by the production process of the present embodiment has a low N value, a small content of the branched structure and a high ratio of linear structure. Aromatic polycarbonate resins generally tend to have a higher flowability (Q value becomes high) even if the ratio of the branched structure is increased at the same Mw, but the high molecular weight aromatic polycarbonate resin obtained by the continuous production process of the present embodiment has accomplished a high flowability (high Q value) while maintaining a low N value.

The high molecular weight aromatic polycarbonate resin obtained by the production process of the present embodiment has a good color hue. The evaluation of the color hue of aromatic polycarbonate resins is generally expressed by YI value. Usually, the YI value of the aromatic polycarbonate resins obtained from the interfacial polymerization method falls within the range of 0.8 to 1.0. In contrast, in the high molecular weight materials of the aromatic polycarbonates obtained by the melt polymerization method, the YI value ranges from 1.7 to 2.0 due to deterioration in quality attributable to the production process. However, the high molecular weight aromatic polycarbonate resin obtained by the production process of the present embodiment shows a YI value equivalent to that of the aromatic polycarbonates obtained by the interfacial polymerization method, with no deterioration of color hue observed.

The aromatic polycarbonate resin obtained by the production process of the present embodiment is of excellent quality with a small content of structural unit having a heterogeneous structure. The structural unit having a heterogeneous structure refers to a structural unit having a structure which has a potential risk of causing undesirable effects, and includes a branch point structural unit which is often contained in a polycarbonate obtained by a conventional melting method, etc. The structural unit having a heterogeneous structure may be present in the skeleton of polycarbonate resins either repeatedly or in random.

The amount of the heterogeneous structure in the aromatic polycarbonate resin is, for example, as the content of the heterogeneous structure (PSA) containing a substructure derived from salicylic acid, preferably 1,000 ppm or less, more preferably 800 ppm or less in the total structural units.

The concentration of the terminal hydroxyl group contained in the aromatic polycarbonate resin obtained by the production process of the present embodiment is not particularly limited, and is appropriately selected depending on the purpose, etc. The concentration of the terminal hydroxyl group is, for example, 1,000 ppm or less, preferably 600 ppm or less.

The process for producing the aromatic polycarbonate resin may be carried out batchwise or continuously. In the following, an example of a production process carried out in a continuous manner will be described in more detail with reference to the drawing, but the present invention is not limited thereto.

In an example of the continuous production process shown in Fig. 5, the aromatic polycarbonate resin is produced through the following steps:

- at first, the main raw material preparing step of preparing an aromatic dihydroxy compound and a carbonic acid diester, which are main raw materials;
- the polycondensation step (hereinafter also referred to as step (A)) of subjecting these raw materials to polycondensation reaction in a molten state, to form an aromatic polycarbonate prepolymer;
- thereafter, subjecting the prepolymer to the step (hereinafter also referred to as step (B)) of adding a catalyst composition, which has been obtained by mixing a dialcohol compound (a linking agent) and a catalyst in the linking agent preparing step), to the aromatic polycarbonate prepolymer, which has been obtained in step (A), to prepare a prepolymer mixture; and
- the step (hereinafter also referred to as step (C)) of subjecting the prepolymer mixture obtained in step (B) to molecular weight increasing linking reaction under reduced pressure condition.

Then, after conducting the steps of:

- stopping the reaction, devolatilizing and removing unreacted raw materials, reaction by-products, etc., in the polymerization reaction liquid (Fig. 6) ;
- adding a heat stabilizer, a releasing agent, a coloring agent, etc. (Fig. 6); and
- forming an aromatic polycarbonate resin into pellets having a predetermined particle size (not shown in the drawing);

pellets of the aromatic polycarbonate resin are molded.

The production process shown in Fig. 5 employs a multistage reaction step, and steps (A) and (C) are each carried out using different reactors. The polycondensation reactor for carrying out step (A) and the molecular weight increasing linking reactor (transesterification reactor) for carrying out step (C) are connected in series through the mixer for carrying out step (B). Preferably, the catalyst composition to be fed to step (B) is undergone dehydration treatment and/or devolatilization treatment after the dialcohol compound has been melted in another reactor and has been added to, mixed with or dispersed in the catalyst composition as an aqueous solution and/or an organic solution of a transesterification catalyst such as an alkali metal compound and/or an alkaline earth metal compound, etc.

The polycondensation reactor of step (A) may be composed of a single reactor or a plurality of reactors connected in series. Preferably two or more, preferably two to six reactors are connected in series.

On the other hand, the molecular weight increasing linking reactor of step (C) may composed of a single reactor or a plurality of reactors connected in series, and it is preferably composed of one reactor (a single reactor).

The reactor for preparing the catalyst composition to be fed to step (B) is preferably provided with two or more

reactors for carrying out the reaction continuously.

In the main raw material preparing step, an aromatic dihydroxy compound and a carbonic acid diester, which are main raw materials, are prepared.

As an apparatus used in the main raw material preparing step, there are provided a raw material mixing tank (1Ra and 1Rb in Fig. 5) and a raw material feed pump (1P in Fig. 5) for feeding the prepared raw material to the polycondensation step. In raw material mixing tanks 1Ra and 1Rb, the aromatic dihydroxy compound and the carbonic acid diester, which are main raw materials, are continuously fed in a molten state from supply ports 1Ma and 1Mb under nitrogen gas atmosphere. In raw material mixing tanks 1Ra and 1Rb, the aromatic dihydroxy compound and the carbonic acid diester are mixed and melted at a predetermined molar ratio (preferably carbonic acid diester/aromatic dihydroxy compound = 1.01 to 1.30 (molar ratio)) under nitrogen gas atmosphere to prepare a raw material-mixed melting liquid. The specifications of raw material mixing tanks 1Ra and 1Rb are not particularly limited, and conventionally known tanks can be used. For example, a tank provided with Max Blend stirring blades (1Ya and 1Yb in Fig. 5) can be used.

For continuous production, as shown in Fig. 5, it is preferable to provide two mixing tanks in the main raw material preparing step. By providing two mixing tanks, mixing and melting are alternately carried out, and valve 1Bp can be switched and continuously fed to reactor 3R.

As the polycondensation reactor for carrying out step (A), one or two or more reactors are used. When two or more reactors are used, they are connected in series. Preferably two or more reactors, more preferably 2 to 6 reactors, particularly preferably 3 to 5 reactors are connected in series and used. The polycondensation reactor may be either a vertical type or a horizontal type, and preferably a vertical type.

For example, in Fig. 5, as the polycondensation reactor of step (A), a first vertical stirring reactor 3R, a second vertical stirring reactor 4R, a third vertical stirring reactor 5R, and a fourth vertical stirring reactor 6R are provided.

In each of the polycondensation reactors, a stirring device such as any conventionally known stirring blade can be provided. Specific examples of the stirring blade include an anchor stirring blade, a Max Blend blade, a double helical ribbon blade, etc.

For example, in the first vertical stirring reactor 3R, the second vertical stirring reactor 4R, and the third vertical stirring reactor 5R in Fig. 5, Max Blend blades 3Y, 4Y, 5Y are provided and in the fourth vertical stirring reactor 6R, a double helical ribbon blade 6Y is provided, respectively.

In each of the reactors, a preheater, a gear pump, a distillation pipe for discharging by-products, etc., produced by the polycondensation reaction, a condenser such as a condenser, dry ice strap, etc., and a receiver of a recovery tank, etc., a decompression device for maintaining the predetermined depressurized state, etc., can be provided.

All the reactors used in the series of continuous production processes start to be adjusted so as to reach the inner temperature and the pressure within the preset range.

In the example of the continuous production process using the production apparatus shown in Fig. 5, at first, the five reactors connected in series (step (A); the first vertical stirring reactor 3R, the second vertical stirring reactor 4R, the third vertical stirring reactor 5R, the fourth vertical stirring reactor 6R, step (B); the mixer (6Mix), step (C); the fifth horizontal stirring reactor 7R) are previously adjusted to the inner temperature and pressure in comply with the respective reactions (melt polycondensation reaction and molecular weight increasing linking reaction).

For example, in the apparatus of Fig. 5, preheaters 3H, 4H, 5H and 6H, and gear pumps 3P, 4P, 5P and 6P are provided. Also, to the four reactors, distillation pipes 3F, 4F, 5F and 6F are attached. Distillation pipes 3F, 4F, 5F and 6F are connected to condensers 3C, 4C, 5C and 6C, respectively, and the respective reactors are kept in a predetermined depressurized state by depressurizing devices 3V, 4V, 5V and 6V.

The reaction conditions in the polycondensation reactor are set so as to become high temperature, high vacuum, and low agitation speed as the polycondensation reaction proceeds. During the polycondensation reaction, the level of the liquid surface is controlled such that the average residence time in each reactor, for example, that in the reactor before the addition of the linking agent falls within the range of about 30 minutes to 120 minutes. Further, in each reactor, phenol produced concurrently with the melt polycondensation reaction is distilled out of the system by distillation pipes 3F, 4F, 5F and 6F attached to each reactor. The degree of reduced pressure in step (A) is preferably 0.0075 torr to 100 torr (1 Pa to 13.3 kPa), and the inner temperature of the reactor is preferably 140°C to 300°C.

More specifically, in the method shown in Fig. 5, step (A) is carried out in four reactors (the first to the fourth vertical stirring reactors), and usually the following temperature and pressure are set. In the following, the conditions are also mentioned for the mixer of step (B) connected in series to the four reactors of step (A) and the molecular weight increasing linking reactor (the fifth horizontal stirring reactor) of step (C).

(Preheater 1H) 180°C to 230°C
(First vertical stirring reactor 3R)
Inner temperature: 150°C to 250°C, Pressure: 200 torr (26.6 kPa) to normal pressure, Temperature of heating medium 220°C to 280°C
(Preheater 3H) 200°C to 250°C

(Second vertical stirring reactor 4R)
Inner temperature: 180°C to 250°C, Pressure: 100 torr (13.3 kPa) to 200 torr (26.6 kPa), Temperature of heating medium 220°C to 280°C
(Preheater 4H) 230°C to 270°C
(Third vertical stirring reactor 5R)
Inner temperature: 220°C to 270°C, Pressure: 1 torr (133 Pa) to 100 torr (13.3 kPa), Temperature of heating medium 220°C to 280°C
(Preheater 5H) 230°C to 270°C
(Fourth vertical stirring reactor 6R)
Inner temperature: 220°C to 280°C, Pressure: 0.0075 torr (1 Pa) to 1 torr (133 Pa), Temperature of heating medium 220°C to 300°C
(Preheater 6H) 270°C to 340°C
(Mixer 6Mix)
Inner temperature: 220°C to 300°C, Pressure: 200 torr (26.6 kPa) to 3,700 torr (0.5 MPa), Temperature of heating medium 220°C to 320°C
(Fifth horizontal stirring reactor 7R)
Inner temperature: 260°C to 340°C, Pressure: 10 torr or less (1,333 Pa or less), Temperature of heating medium 260°C to 340°C

Next, after the inner temperature and pressure of all the reactors used in the continuous production process of the present embodiment have reached within the range of -5% to +5% of the respective set values, and a raw material-mixed molten liquid prepared separately in raw material mixing tank 1R (1Ra and 1Rb) is continuously fed into the first vertical stirring reactor 3R through raw material feed pump 1P and preheater 1H. Also, simultaneously with the start of the feeding of the raw material-mixed molten liquid, the catalyst is continuously fed into the first vertical stirring reactor 3R from catalyst supply port 1Cat in the middle of the transfer piping of the raw material-mixed molten liquid, and then melt polycondensation based on the transesterification reaction is started.

The rotation number of the stirring blade of the reactor is not particularly limited, and preferably maintained at 10 rpm to 200 rpm. While distilling phenol by-produced with the progress of the reaction from the distillation pipe, the polycondensation reaction is carried out while maintaining the level of the liquid surface constant so as to keep the predetermined average residence time. The average residence time in each reactor is not particularly limited, and it is usually from 30 minutes to 120 minutes.

For example, in the production apparatus shown in Fig. 5, melt polycondensation is carried out in the first vertical stirring reactor 3R under nitrogen atmosphere, for example, at a temperature of 200°C and a pressure of 200 torr (27 kPa) while maintaining the rotation number of Max Blend blade 3Y to 160 rpm. While distilling out the by-produced phenol from distillation pipe 3F, the level of the liquid surface is maintained constant so as to keep an average residence time of 60 minutes, and the polycondensation reaction is carried out.

Subsequently, the polymerization reaction liquid is discharged from the bottom of the tank of the first vertical stirring reactor 3R by gear pump 3P, and the liquid is fed through preheater 3H to the second vertical stirring reactor 4R, then through preheater 4H by gear pump 4P to the third vertical stirring reactor 5R, further through preheater 5H by gear pump 5P, and then to the fourth vertical stirring reactor 6R in sequence continuously, and the polycondensation reaction proceeds to produce the aromatic polycarbonate prepolymer.

The aromatic polycarbonate prepolymer obtained in the polycondensation reactor (in the case of using a plurality of reactors in step (A), the last one of the reactors) is fed to the mixer in step (B). On the other hand, the catalyst composition melted by the linking agent preparation apparatus, mixed with the catalyst solution, and undergone dehydration or devolatilization treatment under reduced pressure is directly fed (feeding liquid) from the linking agent feeding apparatus to the mixer. The aromatic polycarbonate prepolymer and the catalyst composition fed to the mixer are mixed in the mixer, and continuously fed to the molecular weight increasing linking reactor of step (C) as a prepolymer mixture.

For example, in the production apparatus shown in Fig. 5, the prepolymer discharged from the fourth vertical stirring reactor 6R is sequentially and continuously fed to mixer 6Mix by gear pump 6P through preheater 6H.

When the catalyst composition containing the transesterification catalyst and the dialcohol compound (linking agent) is fed to the mixer of step (B), the composition is prepared in a linking agent preparation tank, etc., prior to the feeding. For example, in the linking agent preparation apparatus (2Ra, 2Rb), the dialcohol compound is melted into a liquid state. At this time, the viscosity of the dialcohol compound is made preferably 0.1 P to 10,000 P (poise; 0.01 Pa s to 1,000 Pa s), and more preferably 1 P to 100 P (poise; 0.1 Pa·s to 10 Pa s). By setting the viscosity of the dialcohol compound within this range, the dialcohol compound can be fed to the molecular weight increasing linking reactor stably and quantitatively, and the reaction of the dialcohol compound with the aromatic polycarbonate prepolymer can be carried out uniformly and rapidly. Further, a transesterification catalyst solution (aqueous solution and/or organic solution) is introduced from the catalyst solution introduction line (2Cata, 2Catb). By being stirred by the stirring blades (2Ya,

2Yb), the transesterification catalyst is mixed or dispersed, and water and/or an organic solvent is/are removed from the catalyst composition from the dehydration or devolatilization line (2Fa, 2Fb). The catalyst composition is preferably subjected to a dehydration treatment or devolatilization treatment in a molten state. In order to carry out dehydration in such a degree that it does not affect the molecular weight increasing linking reaction, the dehydration treatment or devolatilization treatment is carried out, for example, under reduced pressure at 300 torr (40 kPa) or less, preferably 100 torr (13.3 kPa) or less, more preferably 0.01 torr (1.3Pa) or more and 100 torr (13.3 kPa) or less. Depending on the dialcohol compound, the temperature for the dehydration treatment may vary and the preferable temperature setting may differ, since the dialcohol compounds have a different melt viscosity. The treatment is carried out with the temperature range of not lower than the melting point of the dialcohol compound, preferably not lower than the melting point and not higher than the temperature 80°C above the melting point, more preferably not lower than the melting point and not higher than the temperature 50°C above the melting point. Although there is no particular limitation on the criteria of the dehydration treatment, the water content in the catalyst composition after the dehydration treatment is preferably 3% by mass or less, more preferably 1% by mass or less, further preferably 0.3% by mass or less, and particularly preferably 0.03% by mass or less. This operation permits more quantitative, stable feed of the catalyst composition.

In the case 2-butyl-2-ethyl-1,3-propane glycol (BEPG) is used as the dialcohol compound of the linking agent, for example, BEPG is melted at 75°C to 80°C, since the melting point of BEPG is around 43°C, thereafter a predetermined amount of the catalyst aqueous solution is added thereto, and subjected to dehydration with stirring at 1 torr for about 30 minutes as a criterion.

The linking agent preparation apparatus (2Ra, 2Rb) are containers capable of heating to 50°C to 200°C. The stirring blades (2Ya, 2Yb) provided in the linking agent preparation apparatus (2Ra, 2Rb) may be general stirring blades such as anchor blades, paddle blades, turbine blades, anchor stirring blades, Max Blend stirring blades, helical ribbon type stirring blades, lattice blades, etc., and also the shape is not limited as long as they can stir.

In the continuous production process, as shown in Fig. 5, it is preferable to provide two linking agent preparation apparatuses in the linking agent preparing step. By providing two linking agent preparation apparatuses, mixing and melting are alternately carried out, and valve 2Bp is switched so that the catalyst composition is continuously fed to mixer 6Mix through linking agent metering pump 2P.

The prepolymer mixture discharged from mixer 6Mix is continuously fed to the fifth horizontal stirring reactor 7R sequentially, and the molecular weight increasing linking reaction proceeds under the temperature and pressure conditions suitable for carrying out the molecular weight increasing linking reaction in the fifth horizontal stirring reactor 7R. The by-produced phenol and a part of unreacted monomers are removed to the outside of the system through vent conduit 7F.

For the apparatus such as feed line (transfer pipe) of the catalyst composition, valves and pumps, etc., a double tube or jacket type apparatus in which the catalyst composition flows in the inner tube and a heating medium flows in the outer tube, and further preferably equipment such as full jacket type valves and pumps, can be used to prevent solidification of the catalyst composition.

In step (C), the residence time (from the time of feeding the prepolymer mixture to the time of extracting the resulting high molecular weight polycarbonate resin) of the reaction mixture in the molecular weight increasing linking reactor cannot be specified unconditionally, because it tends to vary depending on the reaction apparatus (reactor) used; however, the residence time is preferably 60 minutes or shorter, more preferably 1 minute to 60 minutes, further preferably 5 minutes to 60 minutes, further more preferably 20 minutes to 60 minutes, still further preferably 25 minutes to 60 minutes, and particularly preferably 30 minutes to 60 minutes.

According to the production process of the present embodiment, the aromatic polycarbonate prepolymer and the catalyst composition are mixed in the mixer and then the mixture is continuously fed to a molecular weight increasing linking reactor to carry out the molecular weight increasing linking reaction, whereby the catalyst composition can be fed stably with high accuracy, and the amount of the heterogeneous structure that spontaneously generates and is inherent to the melting method can be further suppressed. As a result, a high-quality high molecular weight polycarbonate resin having a low N value (structural viscosity index), good color hue, and extremely suppressed increase in heterogeneous structure can be produced by the melting method.

The reaction conditions in step (C) are set so as to ensure high interface renewal property by selecting a suitable polymerization apparatus and stirring blade at high temperature and high vacuum.

The reaction temperature in the molecular weight increasing linking reactor in step (C) falls, for example, within the range of 240°C to 320°C, preferably 260°C to 310°C, more preferably 280°C to 310°C; and the reaction pressure is 10 torr or less (1,333 Pa or less), preferably 2.0 torr or less (267 Pa or less), more preferably 0.01 torr to 1.5 torr (1.3 Pa to 200 Pa), and further preferably 0.01 torr to 1.0 torr (1.3 Pa to 133 Pa). Therefore, it is preferable to use a sealing mechanism including a mechanical seal for sealing the stirring shaft.

In step (C), the level of the liquid surface is desirably controlled so that the average residence time of the reaction mixture of the molecular weight increasing linking reaction be preferably 60 minutes or shorter, more preferably 1 minute to 60 minutes, further preferably 5 minutes to 60 minutes, further preferably 20 minutes to 60 minutes, further

preferably 25 minutes to 60 minutes, particularly preferably 30 minutes to 60 minutes. In the reactor, the by-produced phenol is distilled from the distillation pipe.

In the production apparatus shown in Fig. 5, by-products such as phenol, etc., are continuously liquefied and recovered from condensers 3C and 4C attached to the first vertical stirring reactor 3R and the second vertical stirring reactor 4R, respectively. Each of condensers 3C and 4C is divided into two or more sub-condensers, and a part or all of the distillate condensed in the sub-condenser that is the nearest to the reactor is recirculated to the first vertical stirring reactor 3R and the second vertical stirring reactor 4R, thereby the raw material molar ratio can be easily controlled, so that such a manner is preferred. Also, by-products are continuously solidified and recovered by a cold trap (not shown in the drawing) provided on the downstream side of condensers 5C, 6C and 7C attached to the third vertical stirring reactor 5R, the fourth vertical stirring reactor 6R and the fifth horizontal stirring reactor 7R, respectively.

The recovered by-products may pass through such steps as hydrolysis, purification, etc. and reused (recycled). The major by-products include the aromatic monohydroxyl compounds such as phenol, etc., unreacted dialcohol compounds and cyclic carbonates derived from the dialcohol compounds, etc. In particular, phenol can be reused by recovering and feeding to the diphenyl carbonate production step. Also, when a cyclic carbonate derived from the dialcohol compound is by-produced, the cyclic carbonate can be recovered and reused in the same manner.

In this manner, in the continuous production apparatus shown in Fig. 5, after the inner temperature and pressure of the five reactors have reached the predetermined values, the molten liquid of mixed raw materials and the catalyst are continuously fed through the preheater, and melt polycondensation based on transesterification is initiated. Therefore, from immediately after the start of the melt polycondensation, the polymerization reaction liquid in each reactor reaches to an average residence time equal to that during steady operation. Further, because the molecular weight of prepolymers is increased within a short period of time by binding low molecular weight prepolymers to each other using a dialcohol compound having a fast transesterification rate, the polymer does not suffer from unnecessary thermal history and unlikely to undergo branching. In addition, the quality such as color hue, etc., becomes good.

EXAMPLES

In the following, the present invention will be specifically explained with reference to Examples, but the present invention is not limited to these Examples.

Measurement of the physical property values in Examples were carried out as follows.

(1) Weight average molecular weight (Mw):

It is a value measured by gel permeation chromatography (GPC), and is a weight average molecular weight in terms of polystyrene calculated from a calibration curve of standard polystyrene prepared beforehand.

First, a calibration curve was prepared using standard polystyrene ("PStQuick MP-M" manufactured by Tosoh Corporation) of known molecular weight (molecular weight distribution = 1). The elution time and molecular weight value of each peak were plotted from the measured standard polystyrenes, and approximated by a cubic equation to obtain a calibration curve. The weight average molecular weight (Mw) was obtained from the following calculation equation.

$$Mw = \Sigma (W_i \times M_i) \div \Sigma (W_i)$$

Here, i represents the i-th dividing point when dividing the molecular weight M, $W_i$ represents the i-th weight, and $M_i$ represents the i-th molecular weight. Also, the molecular weight M represents the polystyrene molecular weight value at the same elution time in the calibration curve.

[Measurement conditions]

Apparatus; HLC-8320GPC manufactured by Tosoh Corporation
Column; Guard column: TSKguard column Super MPHZ-M × 1
Analytical column: TSK gel Super Multipore HZ-M × 3
Solvent; HPLC grade chloroform
Injection amount; 10 μL
Sample concentration; 0.2w/v% HPLC grade chloroform solution
Solvent flow rate; 0.35 ml/min

Measurement temperature; 40°C
Detector; RI

(2) Content of aliphatic cyclic carbonate represented by formula (2):

In 100 ml of dichloromethane was dissolved 10 g of an aromatic polycarbonate resin composition, and the solution was added dropwise to 1,000 ml of methanol under stirring. The precipitate was separated by filtration, and the solvent in the filtrate was removed. The residue was qualitatively and quantitatively analyzed by GC-MS under the following measurement conditions. The detection limit value under the measurement conditions is 0.0005 ppm.

[Measurement conditions]

Apparatus: Agilent HP 6890/5973 MSD
Column: Capillary column DB-5 MS, 30 m × 0.25 mm I.D., Film thickness 0.5 μm Temperature rising condition: 50°C (held for 5 minutes) → 300°C (held for 15 minutes), temperature rising rate 10°C/min, inlet temperature: 300°C, injection amount: 1.0 μl (split ratio 25)
Ionization method: EI method
Carrier gas: He, 1.0 ml/min.
Aux temperature: 300 °C
Mass scan range: 33 - 700
Sample dissolving solvent: HPLC grade chloroform
Internal standard substance: 2,4,6-trimethylolphenol

(3) Flow value (Q value)

The flow value (Q value) of the aromatic polycarbonate resin composition was evaluated by the method described in Annex C of JIS K 7210. The measurement was calculated from stroke = 7.0 mm to 10.0 mm using Type CFT-500D manufactured by Shimadzu Corporation. Note that nozzle diameter 1 mm × nozzle length 10 mm was used.
The Q160 value is a melt flow volume (ml/s) per unit time measured at 280°C under a load of 160 kg. The Q10 value is a melt flow volume (ml/s) per unit time measured at 280°C under a load of 10 kg.

(4) YI value (yellowness degree):

Pellets of the aromatic polycarbonate resin composition were dried at 120°C for 5 hours, and then, subjected to injection molding by an injection molding machine ("SE100DU" manufactured by Sumitomo Heavy Industries, Ltd.) under the conditions of a cylinder temperature of 280°C, a mold temperature of 80°C, and a molding cycle of 40 seconds, to form a flat plate having a width of 60 mm, a length of 90 mm and a thickness of 3 mm. YI value was measured for the obtained flat plate in accordance with the standard of JIS K7105 using a spectral color difference meter (SE2000 manufactured by Nippon Denshoku Industries Co., Ltd.).

(5) Impact resistance:

Pellets of the aromatic polycarbonate resin composition were dried at 120°C for 5 hours, and then, subjected to injection molding by an injection molding machine ("SG75Mk-II" manufactured by Sumitomo Heavy Industries, Ltd.) under the conditions of a cylinder temperature of 280°C, a mold temperature of 80°C, and a molding cycle of 50 seconds, to form an ISO multipurpose test piece (3 mm thickness). Charpy impact test (with notch, unit: $kJ/m^2$) was carried out for the obtained test piece at 23°C in accordance with the standard of ISO-179.

(6) Content ratio of first compound and second compound:

3 g of the aromatic polycarbonate resin composition was dissolved in 30 ml of dichloromethane, and 250 ml of acetone was added dropwise to reprecipitate the resin component. The resulting precipitate was separated by filtration and the filtrate was concentrated to dryness with an evaporator. Resin components were appropriately filtered off during the concentration. 6 ml of acetone was added to the residue and dissolved, then 6 ml acetonitrile was added thereto. The obtained solution was filtered through a 0.20 μm PTFE filter and used as a sample solution. The sample solution was qualitatively and quantitatively analyzed by LC-MS.

The quantitative value is a value in terms of bisphenol A obtained from a calibration curve of bisphenol A prepared in advance. Of the compounds represented by any one of formulae (4) to (6), the quantitative analysis was conducted for the compounds having a number of repeating units n = 1 to 6. Of the aromatic cyclic carbonate represented by formula (3), the quantitative analysis was conducted for the compound having a number of repeating units m = 2 to 6.

[Measurement conditions]

Measurement apparatus: Synapt HDMS manufactured by Waters
Ion source: ESI Positive
Capillary voltage: 3.0 kV
Sampling Cone: 20V to 40V
Extraction Cone: 5.0V
Trap CE: 6.0V
Transfer CE: 4.0V
Scan speed: 0.5 sec/scan
MS range: 80 to 2000
LC: UPLC manufactured by Waters
Column: ACQUITY UPLC BEH C18 1.7 μm, 2.1 × 100 mm
Eluent: acetonitrile/water/2-propanol = 80/20/0 → 20 minutes → 48/12/40 (hold for 3 minutes)
Flow amount: 0.4 ml/min
Injection amount: 0.1 μl
Detection wavelength: 220 nm
Temperature: 40°C

(7) Amount of heterogeneous structure:

0.05 g of a resin sample was dissolved in 1 ml of deuterated chloroform (containing 0.05 w/v% TMS), and the amount of the heterogeneous structure in the high molecular weight polycarbonate (PC) was determined using $^1$H-NMR data measured at 23°C under the same conditions as above with a nuclear magnetic resonance analyzer. Specifically, the amount of heterogeneous structure (PSA) was determined from the ratio of presence of Ha and Hb based on the assignment of $^1$H-NMR described in P.7659 in the literature Polymer 42 (2001) 7653-7661 as follows.

[Formula 18]

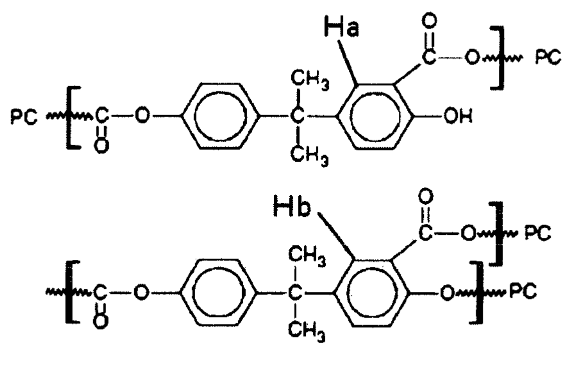

[Calculation]

From the integral ratios of the signals of Ha (around 8.01 ppm) and Hb (around 8.15 ppm) in the above-mentioned heterogeneous structure unit to the signals of phenyl and phenylene group (terminal phenyl group and phenylene group derived from the BPA skeleton) around 7.0 ppm to 7.5 ppm, the amount of the heterogeneous structure was calculated.

[Used materials]

<Aromatic polycarbonate resins>

(a) Flake-shaped polycarbonate resin (Iupilon (Registered Trademark) E-2000F, available from Mitsubishi Engineering-Plastics Corporation), a weight average molecular weight (Mw) 56,800
(b) Flake-shaped polycarbonate resin (Iupilon (Registered Trademark) S-3000F, available from Mitsubishi Engineering-Plastics Corporation), a weight average molecular weight (Mw) 43,600
(c) Flake-shaped polycarbonate resin (Iupilon (Registered Trademark) H-4000F, available from Mitsubishi Engineering-Plastics Corporation), a weight average molecular weight (Mw) 28,500

<Aliphatic cyclic carbonate>

As the aliphatic cyclic carbonate, 5-butyl-5-ethyl-1,3-dioxan-2-one (a compound wherein Ra = butyl group, Rb = ethyl group, $R^5$= $R^6$= $R^7$= $R^8$= hydrogen atom, and i = 1 in formula (2), available from ISOCHEM. Sometimes abbreviated to as "BEPO.") was used.

[Examples 1 to 12 (reference examples), Comparative examples 1 to 6]

<Production of resin pellets>

The aromatic polycarbonate resin and the aliphatic cyclic carbonate were formulated at the mass ratio shown in Table 1, mixed with a tumbler for 20 minutes. Thereafter, the mixture was fed to TEX30HSST manufactured by Japan Steel Works, Ltd. equipped with one vent, mixed and kneaded under the conditions of a number of screw rotation of 200 rpm, a discharge amount of 20 kg/hour and a barrel temperature of 280°C. The molten resin extruded in a strand form was quenched in a water tank and pelletized using a pelletizer, to obtain pellets of an aromatic polycarbonate resin composition.

For the pellets of the obtained aromatic polycarbonate resin composition, the weight average molecular weight (Mw), the content of the aliphatic cyclic carbonate represented by formula (2) (BEPO content), the flow values (Q10 value and Q160 value), the YI value, impact resistance, the content of the aromatic cyclic carbonate (first compound) represented by formula (3), and the content of the compound (second compound) represented by any one of formulae (4) to (6) were evaluated. The results of evaluation are shown in the following Tables 1 and 2.

[Table 1]

| | | Unit | Example 1 | Example 2 | Example 3 | Example 4 | Example 5 | Example 6 | Example 7 | Example 8 | Example 9 |
|---|---|---|---|---|---|---|---|---|---|---|---|
| Raw material formulation | Aromatic polycarbonate resin | --- | E-2000F | S-3000F | H-4000F | E-2000F | S-3000F | H-4000F | E-2000F | S-3000F | H-4000F |
| | Aliphatic cyclic carbonate | ppm | 30 | 30 | 30 | 300 | 300 | 300 | 3.000 | 3,000 | 3,000 |
| Evaluation result | Weight average molecular weight (Mw) | --- | 56, 300 | 43,200 | 28,200 | 55, 500 | 40, 900 | 28.000 | 55, 100 | 40,600 | 27,600 |
| | Aliphatic cyclic carbonate | ppm | 20 | 20 | 10 | 280 | 290 | 290 | 2,760 | 2,850 | 2,900 |
| | $Q_{160}$ value | $x10^{-2}$ ml/s | 5.5 | 15.0 | 69.0 | 6.0 | 14.2 | 60. 0 | 6.5 | 14.8 | 70.0 |
| | $Q_{10}$ value | $x10^{-2}$ mils | 0.12 | 0. 35 | 1.80 | 0. 15 | 0.58 | 1.90 | 0.20 | 0.63 | 2.00 |
| | YI (3 mmt) | --- | 1.0 | 0.9 | 0.8 | 1.0 | 0.8 | 0.8 | 0.9 | 0.7 | 0.8 |
| | Impact resistance (23°C) | $kJ/m^2$ | 88 | 67 | 8 | 88 | 67 | 7 | 87 | 67 | 7 |
| | First compound | wt% | 0.6 | 0.5 | 0.6 | 0.6 | 0.5 | 0.6 | 0.6 | 0.5 | 0.6 |
| | Second compound | wt% | 0.8 | 1.1 | 0.9 | 0.8 | 1.1 | 0.9 | 0.8 | 1.1 | 0.9 |
| | First compound + Second compound | wt% | 1.4 | 1.6 | 1.5 | 1.4 | 1.6 | 1.5 | 1.4 | 1.6 | 1.5 |

[Table 2]

| | | Unit | Example 10 | Example 11 | Example 12 | Comparative example 1 | Comparative example 2 | Comparative example 3 | Comparative example 4 | Comparative example 5 | Comparative example 6 |
|---|---|---|---|---|---|---|---|---|---|---|---|
| Raw material formulation | Aromatic polycarbonate resin | --- | E-2000F | S-3000F | H-4000F | E-2000F | S-3000F | H-4000F | E-2000F | S-3000F | H-4000F |
| | Aliphatic cyclic carbonate | ppm | 10,000 | 10,000 | 10,000 | --- | --- | --- | 30,000 | 30,000 | 30,000 |
| Evaluation result | Weight average molecular weight (Mw) | --- | 54,500 | 40,100 | 26,900 | --- | --- | --- | 54,100 | 39,800 | 26,400 |
| | Aliphatic cyclic carbonate | ppm | 9, 870 | 9, 560 | 9,730 | 0 | 0 | 0 | 29,860 | 28, 900 | 29,700 |
| | $Q_{160}$ value | $\times 10^{-2}$ ml/s | 7.0 | 24.0 | 75.0 | 3.0 | 9.2 | 48.8 | 20.0 | 50.0 | 120.0 |
| | $Q_{10}$ value | $\times 10^{-2}$ mils | 0.23 | 0.75 | 2. 30 | 0.10 | 0.30 | 170 | 0.30 | 1.00 | 3.00 |
| | YI (3 mmt) | --- | 0.9 | 0.7 | 0.8 | 1.7 | 1.5 | 1.3 | Poor appearance | Poor appearance | Poor appearance |
| | Impact resistance (23°C) | k J/$m^2$ | 87 | 67 | 8 | 88 | 67 | 7 | - | - | - |
| | First compound | wt% | 0.7 | 0.5 | 0.6 | 0.6 | 0.5 | 0.6 | 0.6 | 0.5 | 0.6 |
| | Second compound | wt% | 0.8 | 1.2 | 1.0 | 0. 8 | 1.1 | 0.9 | 0.8 | 1.1 | 0.9 |
| | First compound + Second compound | wt% | 1.5 | 1.7 | 1.6 | 1.4 | 1.6 | 1.5 | 1.4 | 1.6 | 1.5 |

Based on the results of Table 1 and Table 2, the correlation between the weight average molecular weight (Mw) and the Q10 value is shown in Fig. 1, and the correlation between the weight average molecular weight (Mw) and the Q160 value is shown in Fig. 2, respectively. In addition, the correlation between the Q10 and Q160 values and the content of the aliphatic cyclic carbonate (BEPO) are shown in Fig. 3 and Fig. 4, respectively.

As shown in Fig. 1 and Fig. 2, the aromatic polycarbonate resin compositions of Examples, in which the weight average molecular weight (Mw) and the Q10 value satisfy inequality (A) or (B), or the weight average molecular weight (Mw) and the Q160 value satisfy inequality (C) or (D), show better flowability and color hue than the aromatic polycarbonate resin compositions of Comparative examples.

[Examples 21]

A polycarbonate resin was produced under the following conditions with a continuous producing apparatus having two main raw material preparation tanks (1Ra, 1Rb), two catalyst composition preparation tanks (2Ra, 2Rb), four vertical stirring reactors (3R to 6R) and a horizontal stirring reactor shown in Fig. 5.

First, each of the reactors and preheaters was previously set to an internal temperature and pressure in accordance with the following reaction conditions.

(Preheater 1H) 225°C
(First vertical stirring reactor 3R)
Inner temperature: 215°C, Pressure: 200 torr (26.6 kPa), Temperature of heating medium 245°C
(Preheater 3H) 235°C
(Second vertical stirring reactor 4R)
Inner temperature: 225°C, Pressure: 150 torr (20 kPa), Temperature of heating medium 255°C
(Preheater 4H) 245°C
(Third vertical stirring reactor 5R)
Inner temperature: 235°C, Pressure: 100 torr (13.3 kPa), Temperature of heating medium 265°C
(Preheater 5H) 270°C
(Fourth vertical stirring reactor 6R)
Inner temperature: 260°C, Pressure: 0.1 torr (13.3 Pa), Temperature of heating medium 280°C

Under a nitrogen gas atmosphere, a molten mixture was prepared by mixing diphenylcarbonate and BPA consecutively so as to have a raw material molar ratio (diphenylcarbonate/bisphenol A (BPA)) of 1.125 in main raw material preparation tanks 1Ra and 1Rb. The mixture was continuously fed at a flow rate of 24 kg/hr to the first vertical stirring polymerization tank 3R. While controlling the degree of opening of the valve provided at the polymer discharge line at the bottom of the tank so that the average residence time in the first vertical stirring polymerization tank 3R be 60 minutes, the liquid surface level was kept constant. During this time, 0.005 mol/L of an aqueous cesium carbonate ($Cs_2CO_3$) solution was added as a second catalyst from 1Cat in a ratio (2.6 ml/hr) of $0.25\times10^{-6}$ mol per 1 mol of BPA.

The polymerization reaction solution discharged from the bottom of the tank of the first vertical stirring reactor 3R is subsequently fed to the second vertical stirring reactor 4R, the third vertical stirring reactor 5R, the fourth vertical stirring reactor 6R, and mixer 6Mix continuously.

At the same time, 1,000 g of the dialcohol compound (2-butyl-2-ethyl-1,3-propane glycol; BEPG) was charged in a catalyst composition preparation tank equipped with anchor blades. Thereafter, while carrying out nitrogen substitution where appropriate, the dialcohol compound was melted by heating at 75°C to 80°C. 20 ml of 0.005 mol/L aqueous cesium carbonate ($Cs_2CO_3$) solution was added thereto as a transesterification catalyst. Further, dehydration treatment (final moisture content: 0.03% by mass) was carried out at 0.1 torr, to prepare a catalyst composition.

To mixer 6Mix was fed the prepolymer (PP) with a flow rate of 13,200 g/hr, and simultaneously, the dialcohol compound containing the catalyst having a melt viscosity of 40 P (poise) prepared as described above was continuously fed from the catalyst composition preparation tanks (2Ra, 2Rb) at a flow rate of 120 g/hr (0.25 mol per 1 mol of the total terminal group amount (amount of terminal capped phenyl group) of PP) with a metering pump. At this time, the amount of the transesterification catalyst added was in a ratio of $0.25\times10^{-6}$ mol per 1 mol of BPA constituting the prepolymer. The temperature of the preheater 6H was controlled to 290°C, and the temperature of mixer 6Mix was controlled to to 280°C to 300°C, and the pressure was set to 760 torr (0.10 MPa).

Mixer 6Mix and the catalyst composition preparation tank are connected by a transfer pipe. This transfer pipe has a double tube structure and has a structure in which a heating medium for temperature control circulates on the outer tube. The temperature of this heating medium was set at 140°C to 150°C, and temperature control was carried out.

The PP continuously fed to mixer 6Mix had a weight average molecular weight (Mw) in terms of polystyrene of 30,000, a terminal phenyl group concentration of 6.0 mol % and a terminal hydroxyl group concentration of 200 ppm.

To the fifth horizontal stirring reactor 7R, the PP mixture was fed from mixer 6Mix with a flow rate of 13,200

g/hr. At this time, the inner pressure of the fifth horizontal stirring reactor 7R was set at a reduced pressure condition of 0.5 torr (66.7 Pa). The degree of reduced pressure went as was set, and a stable operation was achieved without any fluctuation. The inner temperature of the apparatus was controlled to 300°C to 320°C.

During the polymerization reaction (molecular weight increasing reaction), the liquid level was controlled so that the average residence time in each vertical reactor was 60 minutes and the average residence time in the fifth horizontal stirring reactor 7R was 60 minutes. Also, phenol by-produced simultaneously with the polymerization reaction was distilled off. The fifth horizontal stirring reactor 7R was stirred with stirring blade 7Y at 20 rpm.

The prepolymer mixture obtained after mixing in mixer 6Mix had a terminal hydroxyl group concentration of 2,000 ppm and a weight average molecular weight (Mw) in terms of polystyrene of 26,500.

The crude aromatic polycarbonate obtained from the fifth horizontal stirring reactor had a weight average molecular weight (Mw) in terms of polystyrene of 57,000, a terminal hydroxyl group concentration of 600 ppm and a PSA amount of 500 ppm. It had a content of 5-butyl-5-ethyl-1,3-dioxan-2-one (BEPO), which is a cyclic carbonate, of 30 ppm.

The reactors used in Example 21 are as follows.

First to fourth vertical stirring reactors

Manufactured by; Sumitomo Heavy Industries, Ltd.
Material; SUS316L electropolishing
Agitating blade; First to third vertical stirring reactors have Max Blend blade
Fourth vertical stirring reactor has a double helical ribbon blade Catalyst composition preparation tank
Material; SUS316

Mixer (in-line mixer)

S1KRC reactor manufactured by Kurimoto Ltd.
Size; L/D=10.2, Body effective volume =0.12L

Liquid feeding pump for catalyst composition
Continuous non pulsating metering pump manufactured by Fuji Techno Industries Corporation
Transfer pipe

Material: SUS316

Structure: Double tube

Fifth horizontal stirring reactor

Manufactured by; Hitachi, Ltd.
Equipment type; Spectacle blade polymerizer, effective volume = 13L
Material; SUS316L electropolishing
Extracting machine; Screw type drawing machine
Method for adjusting oxygen concentration in reactor; Pressurized devolatilization substitution with nitrogen

The residence time of the reaction mixture is the average time that the reaction mixture takes to run through the horizontal stirring reactor from the feed port of aromatic polycarbonate prepolymer to the outlet of produced crude aromatic polycarbonate resin.

The obtained crude aromatic polycarbonate resin was fed to a twin-screw extruder manufactured by The Japan Steel Works, Ltd. at a feed rate of 58 kg/h. The extruder was provided with an addition port (1) for feeding a catalyst deactivating agent at the most upstream, and a pair of a water injection port and a vent port for water injection/devolatilization operation was installed at four places. The disk of the twin-screw was appropriately selected. On the most downstream side, an addition port (11) for feeding additives, etc., was provided. Fig. 6 shows the port layout of the twin-screw extruder.

The temperature of the twin-screw extruder was controlled at 280°C to 290°C at the portion for melting, and at 300°C at the die head portion.

After feeding the crude aromatic polycarbonate resin to the twin-screw extruder, butyl paratoluenesulfonate was fed from the uppermost addition port (1) as a catalyst deactivating agent in an amount of 0.0005 part by mass per 100 parts by mass of the resin. Further, Irganox 1076 was fed from the most downstream addition port (11) in an amount

of 0.1 part by mass per 100 parts by mass of the resin.

From the four water injection ports, water was injected at a flow rate of 0.6 kg/h, which was 1.0 part by mass per 100 parts by mass of the resin fed. Oil rotary type vacuum pumps were connected to the four vent ports, and the degree of reduced pressure in the apparatus was controlled to 0.1 kPaA or less.

The number of screw rotation was 200 rpm. The temperature of the resin discharged from the extruder was 310°C.

The aromatic polycarbonate obtained from the above-mentioned extruder had a weight average molecular weight (Mw) in terms of polystyrene of 53,500, a concentration of terminal hydroxyl group of 500 ppm, a content of BEPO of 1 ppm, an amount of PSA of 800 ppm and a YI value of 1.1.

[Example 22]

In Example 22, the crude aromatic polycarbonate obtained from the fifth horizontal stirring reactor having a weight average molecular weight (Mw) in terms of polystyrene of 48,000, a concentration of terminal hydroxyl group of 500 ppm, an amount of PSA of 400 ppm and a content of BEPO of 10 ppm was used. The conditions were the same as in Example 21, except for the species of the crude aromatic polycarbonate and the number of screw rotation of 300 rpm in order to maintain the discharge resin temperature at 310°C. The results are shown in Table 3.

[Example 23]

In Example 23, the crude aromatic polycarbonate obtained from the fifth horizontal stirring reactor having a weight average molecular weight (Mw) in terms of polystyrene of 43,000, a concentration of terminal hydroxyl group of 400 ppm, an amount of PSA of 500 ppm and a content of BEPO of 10 ppm was used. The conditions were the same as in Example 21, except for the species of the crude aromatic polycarbonate and the number of screw rotation of 350 rpm in order to maintain the discharge resin temperature at 310°C. The results are shown in Table 3.

[Example 24]

In Example 24, water was injected from the water injection port in a flow amount of 0.3 kg/h, which was 0.5 part by mass per 100 parts by mass of the resin fed. The conditions were the same as in Example 21, except for the amount of water injection. The results are shown in Table 3.

[Example 25]

In Example 25, 5,000 ppm of BEPO was added to the crude aromatic polycarbonate. The conditions were the same as in Example 21, except for the amount of BEPO added. The results are shown in Table 3.

[Comparative example 21]

In Comparative example 21, water was injected from the water injection port in a flow amount of 3.0 kg/h, which was 5.2 parts by mass per 100 parts by mass of the resin fed. The conditions were the same as in Example 23, except for the amount of water injection; however, the resin temperature in the apparatus was lowered to raise the viscosity of the resin, so that the screw motor suffered from over torque, whereby continued operation was not possible.

[Comparative example 22]

In Comparative example 22, the operation was carried out with a number of screw rotation of 600 rpm and a discharge resin temperature of 320°C. The conditions were the same as in Example 23, except for the increase of the number of screw rotation, which raised the temperature of the discharged resin; however, remarkable coloration occurred in the obtained resin. The results are shown in Table 3.

[Comparative example 23]

In Comparative example 23, the operation was carried out without injecting water. The conditions were the same as in Example 23, except for no water injection. The results are shown in Table 3.

[Table 3]

| | | Unit | Example 21 | Example 22 | Example 23 | Example 24 | Example 25 | Comparative example 21 | Comparative example 22 | Comparative example 23 |
|---|---|---|---|---|---|---|---|---|---|---|
| Crude aromatic polycarbonate resin | Weight average molecular weight (Mw, in terms of PS) | - | 57,000 | 48,000 | 43,000 | 57,000 | 57,000 | 43,000 | 43,000 | 43,000 |
| | Concentration at terminal hydroxyl group | ppm | 600 | 500 | 400 | 600 | 600 | 400 | 400 | 400 |
| | Heterogeneous structure (PSA amount) | ppm | 500 | 400 | 500 | 500 | 500 | 500 | 500 | 500 |
| | Aliphatic cyclic carbonate (BEPO amount) | ppm | 30 | 10 | 10 | 30 | 5000 | 10 | 10 | 10 |
| Water-injection, devolatilization and extrusion conditions | Feed amount of crude aromatic polycarbonate | kg/h | 58 | 58 | 58 | 58 | 58 | 58 | 58 | 58 |
| | Water injection amount | kg/h | 0.6 | 0.6 | 0.6 | 0.3 | 0.6 | 3.0 | 0.6 | 0 |
| | Number of screw rotation | rpm | 200 | 300 | 350 | 200 | 200 | - | 600 | 350 |
| | Discharge resin temperature | °C | 310 | 310 | 310 | 310 | 310 | 180 | 320 | 310 |
| | Catalyst deactivation feed port | - | Addition port (1) | Addition port (1) | Addition port (1) | Addition port (1) | Addition port (1) | Addition port (1) | Addition port (1) | Addition port (1) |

(continued)

| | | Unit | Example 21 | Example 22 | Example 23 | Example 24 | Example 25 | Comparative example 21 | Comparative example 22 | Comparative example 23 |
|---|---|---|---|---|---|---|---|---|---|---|
| Obtained aromatic polycarbonate resin | Weight average molecular weight (Mw, in terms of PS) | - | 53,500 | 43,000 | 40,000 | 51,000 | 53,000 | Operation impossible due to over torque | 39,000 | 40,000 |
| | Concentration of terminal hydroxyl group | ppm | 500 | 600 | 500 | 600 | 500 | | 450 | 600 |
| | Heterogeneous structure (PSA amount) | - | 800 | 600 | 800 | 800 | 800 | | 1,400 | 1,800 |
| | Aliphatic cyclic carbonate (BEPO amount) | ppm | 1 | 1 | 2 | 5 | 10 | | 2 | 10 |
| | First compound | wt% | 0.5 | 0.4 | 0.4 | 0.5 | 0.5 | | 0.4 | 0.5 |
| | Second compound | wt% | 0.7 | 0.9 | 1.0 | 0.8 | 0.7 | | 1.0 | 1.1 |
| | First compound + Second compound | wt% | 1.2 | 1.3 | 1.4 | 1.3 | 1.2 | | 1.4 | 1.6 |
| | Q160 value | $\times 10^{-2}$ ml/s | 3.9 | 9.4 | 11.7 | 4.3 | 4.3 | | 11.7 | 11.7 |
| | Q10 value | $\times 10^{-2}$ ml/s | 0.13 | 0.31 | 0.39 | 0.14 | 0.14 | | 0.29 | 0.26 |
| | YI value | - | 1.1 | 1.0 | 0.9 | 1.5 | 1.7 | | 3.0 | 5.0 |
| in terms of PS=in terms of polystyrene | | | | | | | | | | |

INDUSTRIAL APPLICABILITY

The aromatic polycarbonate resin composition has high flowability, in particular, flowability at low shear, good color hue, and can be used for injection molding of precision parts, thin materials, etc.

REFERENCE SIGNS LIST

1Ra, 1Rb: Raw material mixing tank, 2Ra, 2Rb: Linking agent preparation apparatus, 3R: First vertical stirring reactor, 4R: Second vertical stirring reactor, 5R: Third vertical stirring reactor, 6R: Fourth vertical stirring reactor, 6Mix: Mixer, 7R: Fifth horizontal stirring reactor.

## Claims

1. A process for producing an aromatic polycarbonate resin comprising the steps of:

   reacting an aromatic polycarbonate prepolymer and a dialcohol compound in the presence of a transesterification catalyst to increase a molecular weight to obtain a crude aromatic polycarbonate resin containing an aliphatic cyclic carbonate; and

   feeding the crude aromatic polycarbonate resin to a kneading extruder equipped with a vent port, a water injection port and a screw, and then, injecting water and carrying out devolatilization at a discharge resin temperature of not lower than 200°C and not higher than 310°C, to remove at least a part of the aliphatic cyclic carbonate, wherein the water injection port is provided upstream the vent port.

2. The process according to Claim 1, wherein the aliphatic cyclic carbonate is present in the crude aromatic polycarbonate resin in an amount of 1 to 10,000 ppm in mass basis.

3. The process according to Claim 1 or 2, wherein the aliphatic cyclic carbonate is present in the aromatic polycarbonate resin in an amount of less than 20 ppm in mass basis.

4. The process according to any one of Claims 1 to 3, wherein the water is injected in an amount of at least 0.05 part by mass to 3.0 parts by mass based on 100 parts by mass of the crude aromatic polycarbonate resin.

5. The process according to any one of Claims 1 to 4, wherein the kneading extruder is equipped with a port for adding a catalyst deactivating agent upstream the water injection port.

6. The process according to Claim 5, wherein the catalyst deactivating agent is an acidic compound.

## Patentansprüche

1. Verfahren zur Herstellung eines aromatischen Polycarbonatharzes, umfassend die Schritte:

   Reagieren eines aromatischen Polycarbonat-Prepolymers und einer Dialkoholverbindung in Gegenwart eines Umesterungskatalysators zur Erhöhung eines Molekulargewichts, um ein rohes aromatisches Polycarbonatharz zu erhalten, das ein aliphatisches cyclisches Carbonat enthält, und

   Einspeisen des rohen aromatischen Polycarbonatharzes in einen Knetextruder, der mit einer Entlüftungsöffnung, einer Wasserinjektionsöffnung und einer Schnecke ausgestattet ist, und dann Injizieren von Wasser und Durchführen einer Entgasung bei einer Ausstoßharztemperatur von nicht niedriger als 200°C und nicht höher als 310°C, um mindestens einen Teil des aliphatischen cyclischen Carbonats zu entfernen, wobei die Wasserinjektionsöffnung der Entlüftungsöffnung vorgelagert ist.

2. Verfahren gemäß Anspruch 1, wobei das aliphatische cyclische Carbonat in dem rohen aromatischen Polycarbonatharz in einer Menge von 1 bis 10.000 ppm auf Massebasis vorliegt.

3. Verfahren gemäß Anspruch 1 oder 2, wobei das aliphatische cyclische Carbonat in dem aromatischen Polycarbonatharz in einer Menge von weniger als 20 ppm auf Massebasis vorliegt.

4. Verfahren gemäß einem der Ansprüche 1 bis 3, wobei das Wasser in einer Menge von mindestens 0,05 Masseteile bis 3,0 Masseteile, bezogen auf 100 Masseteile des rohen aromatischen Polycarbonatharzes, injiziert wird.

5. Verfahren gemäß einem der Ansprüche 1 bis 4, wobei der Knetextruder mit einer Öffnung zur Zugabe eines Katalysatordeaktivierungsmittels oberhalb der Wasserinjektionsöffnung ausgestattet ist.

6. Verfahren gemäß Anspruch 5, wobei das Katalysatordeaktivierungsmittel eine saure Verbindung ist.

**Revendications**

1. Procédé de production d'une résine de polycarbonate aromatique comprenant les étapes consistant à :

faire réagir un prépolymère de polycarbonate aromatique et un composé de dialcool en présence d'un catalyseur de transestérification pour augmenter un poids moléculaire afin d'obtenir une résine de polycarbonate aromatique brute contenant un carbonate cyclique aliphatique ; et

introduire la résine de polycarbonate aromatique brute dans une extrudeuse-malaxeuse équipée d'un orifice d'aération, d'un orifice d'injection d'eau et d'une vis, et ensuite injecter de l'eau et effectuer un dégagement de matières volatiles à une température de résine de décharge non inférieure à 200 °C et non supérieure à 310 °C, pour éliminer au moins une partie du carbonate cyclique aliphatique, dans lequel l'orifice d'injection d'eau est fourni en amont de l'orifice d'aération.

2. Procédé selon la revendication 1, dans lequel le carbonate cyclique aliphatique est présent dans la résine de polycarbonate aromatique brute en une quantité de 1 à 10 000 ppm en masse.

3. Procédé selon la revendication 1 ou 2, dans lequel le carbonate cyclique aliphatique est présent dans la résine de polycarbonate aromatique en une quantité inférieure à 20 ppm en masse.

4. Procédé selon l'une quelconque des revendications 1 à 3, dans lequel l'eau est injectée en une quantité d'au moins 0,05 partie en masse à 3,0 parties en masse sur la base de 100 parties en masse de la résine de polycarbonate aromatique brute.

5. Procédé selon l'une quelconque des revendications 1 à 4, dans lequel l'extrudeuse-malaxeuse est équipée d'un orifice pour ajouter un agent de désactivation de catalyseur en amont de l'orifice d'injection d'eau.

6. Procédé selon la revendication 5, dans lequel l'agent de désactivation de catalyseur est un composé acide.

Fig. 1

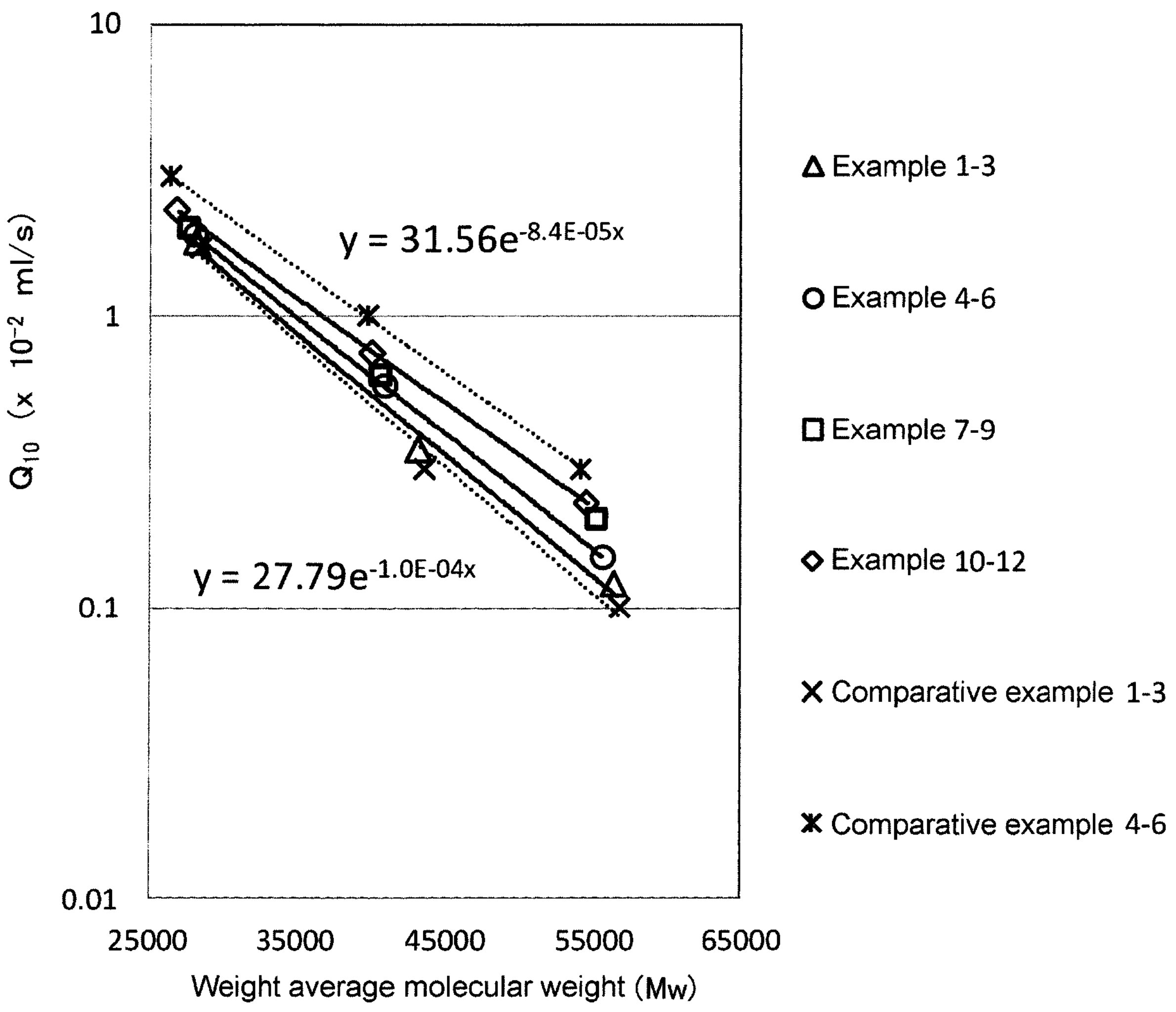
10
1
0.1
0.01
Q10 (x 10-2 ml/s)
y = 31.56e-8.4E-05x
y = 27.79e-1.0E-04x
25000
35000
45000
55000
65000
Weight average molecular weight (Mw)
Example 1-3
Example 4-6
Example 7-9
Example 10-12
Comparative example 1-3
Comparative example 4-6

Fig. 2

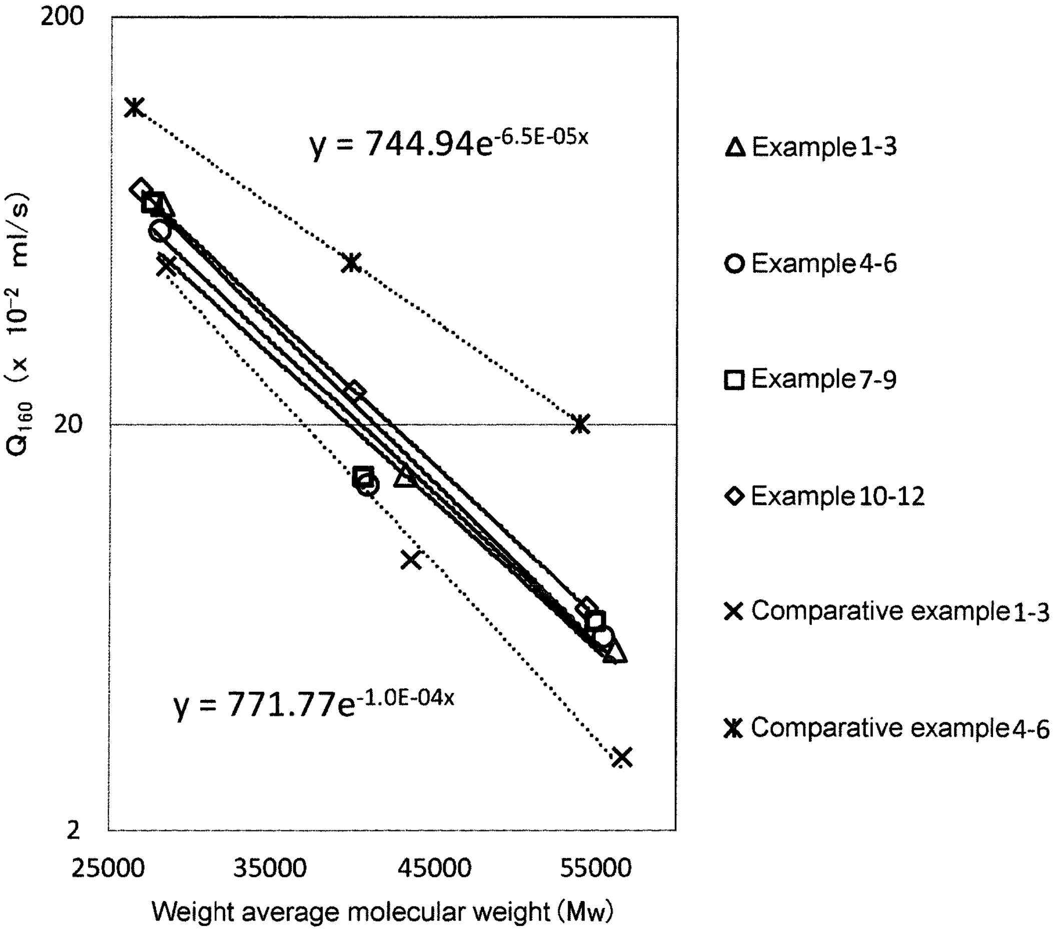
200
20
2
$Q_{160}$ (x $10^{-2}$ ml/s)
y = 744.94e^-6.5E-05x
y = 771.77e^-1.0E-04x
25000
35000
45000
55000
Weight average molecular weight (Mw)
Example 1-3
Example 4-6
Example 7-9
Example 10-12
Comparative example 1-3
Comparative example 4-6

Fig. 3

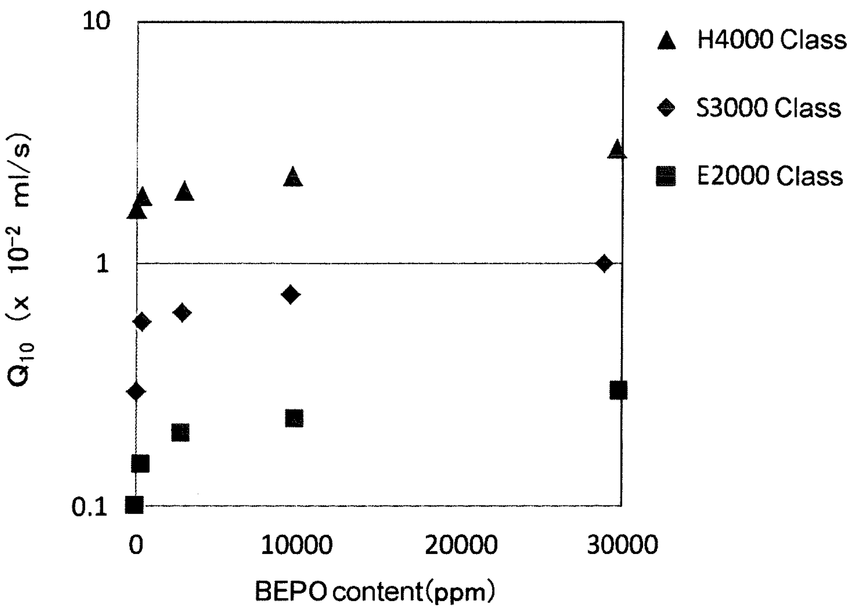
10
1
0.1
$Q_{10}$ (x $10^{-2}$ ml/s)
0
10000
20000
30000
BEPO content(ppm)
H4000 Class
S3000 Class
E2000 Class

Fig. 4

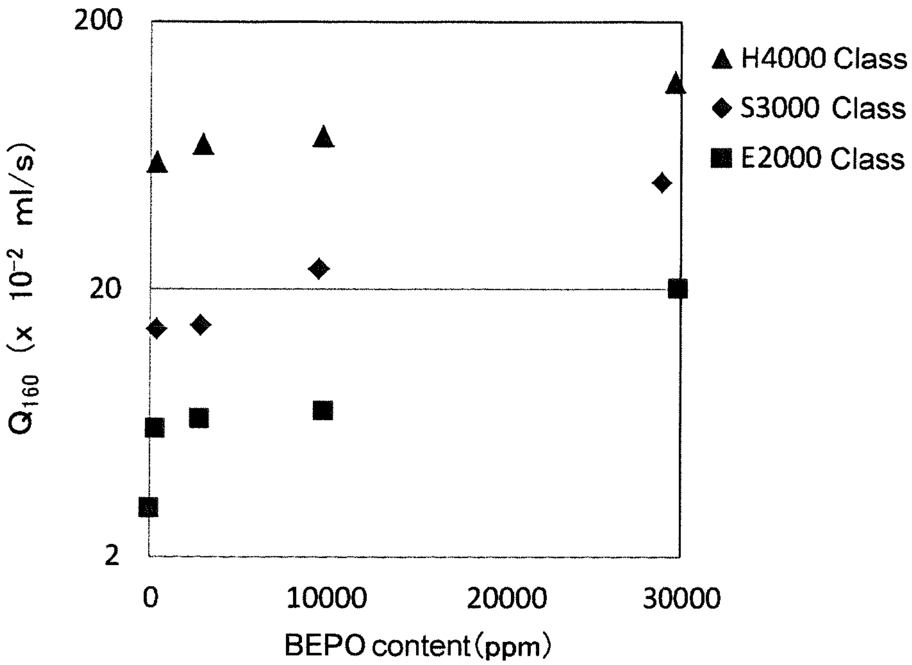
200
20
2
Q160 (x 10-2 ml/s)
0
10000
20000
30000
BEPO content (ppm)
H4000 Class
S3000 Class
E2000 Class

Fig. 5

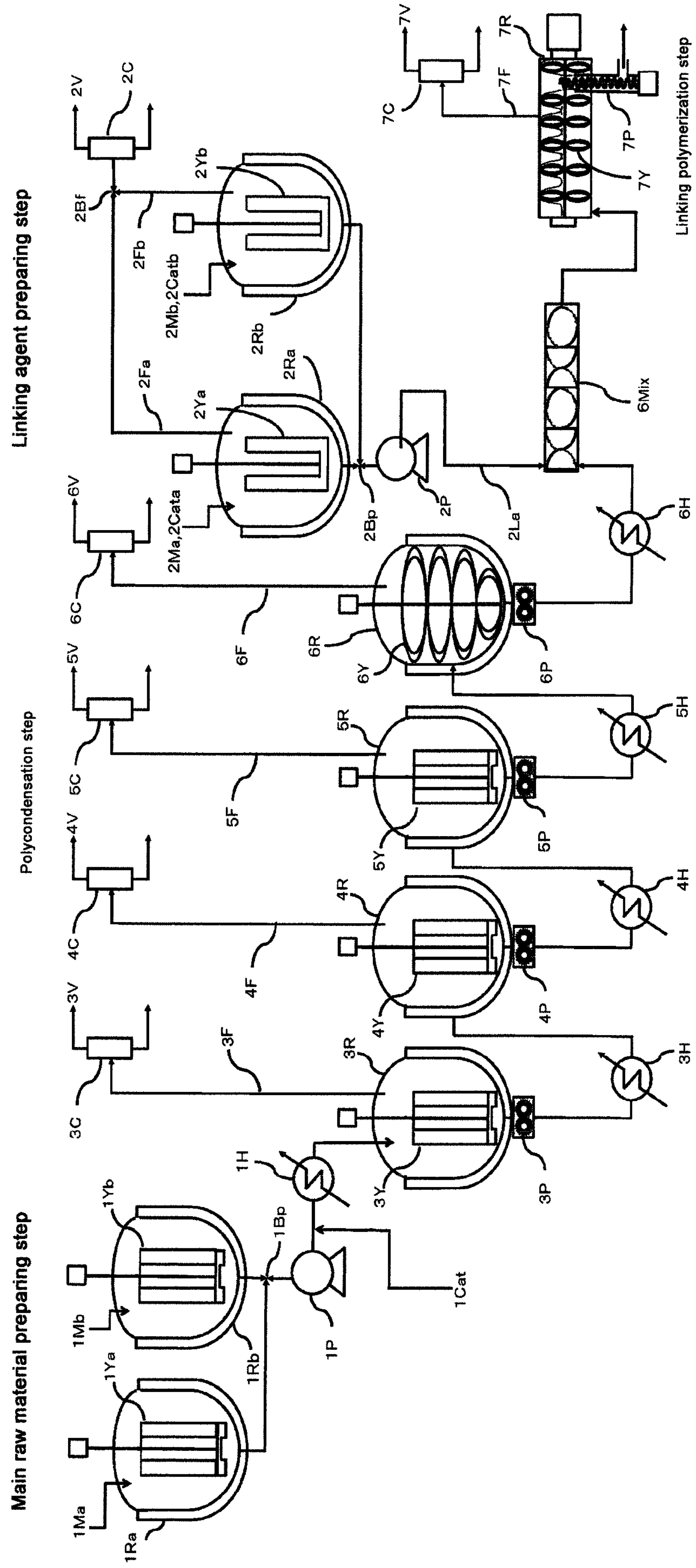
Main raw material preparing step
Polycondensation step
Linking agent preparing step
Linking polymerization step
1Ma
1Ra
1Ya
1Mb
1Rb
1Yb
1Bp
1P
1Cat
1H
3C
3V
3F
3R
3Y
3P
3H
4C
4V
4F
4R
4Y
4P
4H
5C
5V
5F
5R
5Y
5P
5H
6C
6V
6F
6R
6Y
6P
6H
2Ma,2Cata
2Bp
2P
2La
2Fa
2Ya
2Ra
2Mb,2Catb
2Rb
2Fb
2Yb
2Bf
2C
2V
6Mix
7C
7V
7F
7R
7P
7Y

Fig. 6

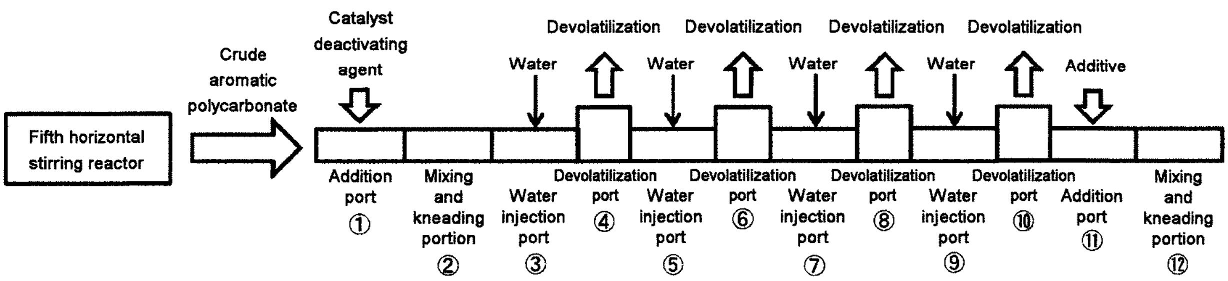
Fifth horizontal stirring reactor
Crude aromatic polycarbonate
Catalyst deactivating agent
Water
Devolatilization
Water
Devolatilization
Water
Devolatilization
Water
Devolatilization
Additive
Addition port ①
Mixing and kneading portion ②
Water injection port ③
Devolatilization port ④
Water injection port ⑤
Devolatilization port ⑥
Water injection port ⑦
Devolatilization port ⑧
Water injection port ⑨
Devolatilization port ⑩
Addition port ⑪
Mixing and kneading portion ⑫

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03031516 A1
- WO 2014077350 A1
- JP 2000159879 A
- JP 2011513522 A
- WO 2011062220 A
- WO 2012157766 A


### Non-patent literature cited in the description


- *Makromolekulare Chemie,* 1965, vol. 88, 215-231
- *Polymer,* 2001, vol. 42, 7653-7661